# EUROPEAN PATENT APPLICATION

(11) **EP 4 485 133 A1**
(43) Date of publication of application: **01.01.2025**
(21) Application number: 23214672.0
(22) Date of filing: 06.12.2023
(51) Int. Cl.: G06F 1/20, G06F 1/3206, G06F 1/3228, G06F 1/324, G06F 1/3234, G06F 1/329, G06F 1/3296, G06F 9/50

(54) **DEVICE, METHOD, AND SYSTEM TO PROVIDE A LIMITED POWER STATES MODE FOR MANAGING PROCESSOR OPERATION**

(30) Priority: 29.06.2023 US 202318216352
(71) Applicant: INTEL Corporation, Santa Clara, CA 95054 (US)
(72) Inventor: Babajani, Yoav, 7528271 Rishon Le Zion (IL); Rotem, Efraim, 34400 Haifa (IL); Reisfeld, Gideon, 34400 Haifa (IL); Dahiya, Somvir Singh, Hillsboro, OR, 97124 (US); Sabin, Yevgeni, 3460505 Haifa (IL)
(74) Representative: Samson & Partner Patentanwälte mbB

(57) **Abstract**

Techniques and mechanisms for determining a mode by which a processor is to be transitioned between power states. In one embodiment, circuitry selectively transitions power management of the processor to or from a limited power states (LPS) mode which, as compared to an alternative power management mode, makes a relatively limited number of two or more power states available to the processor. A transition to or from the LPS mode is performed based on a thermal condition such as one which is based on a skin temperature of a housing structure in which the processor is disposed. In another embodiment, transitions between the two or more power states is performed, during the LPS mode, based on a pendency of a software workload, or based on a completion of such a software workload.

## Description

### BACKGROUND

### 1. Technical Field

This disclosure generally relates to processor operations and more particularly, but not exclusively, to the determining of a processor power state.

### 2. Background Art

Smart phones, notebook computers, pad- and pod-type devices, tablets and other kinds of information and media terminals have gained widespread popularity and continue to evolve in terms of performance, size, and functionality. A major benefit of some modern architectures, which have relatively large processor components (such as a four-core processor or an eight-core processor), is the ability to rapidly and on-demand boost processor and system performance. Such "turbo burst" capability allows a CPU and/or graphics processor unit (GPU) to burst to very high power, delivering a responsive system with enhanced user experience. However, successive generations of devices, whether mobile or stationary, are expected to meet increasingly strict power and performance requirements.

### BRIEF DESCRIPTION OF THE DRAWINGS

The various embodiments of the present invention are illustrated by way of example, and not by way of limitation, in the figures of the accompanying drawings and in which:
FIG. 1 shows a functional block diagram illustrating features of a system to determine a mode for managing power states of a processor according to an embodiment.
FIG. 2 shows a functional block diagram illustrating features of a system to provide a limited power states mode according to an embodiment.
FIG. 3 shows a functional block diagram illustrating features of a system to manage power consumption by a processor according to an embodiment.
FIGs. 4A, 4B show flow diagrams each illustrating respective features of a method to operate power management logic according to a corresponding embodiment.
FIG. 5 shows a functional block diagram illustrating features of a system to configure a limited power states mode according to an embodiment.
FIG. 6 shows a graph illustrating operations to transition a processor between power states according to an embodiment.
FIG. 7 shows a functional block diagram illustrating features of a computing device to provide power management of a processor according to an embodiment.
FIG. 8 illustrates an exemplary system.
FIG. 9 illustrates a block diagram of an example processor that may have more than one core and an integrated memory controller.
FIG. 10A is a block diagram illustrating both an exemplary in-order pipeline and an exemplary register renaming, out-of-order issue/execution pipeline according to examples.
FIG. 10B is a block diagram illustrating both an exemplary example of an in-order architecture core and an exemplary register renaming, out-of-order issue/execution architecture core to be included in a processor according to examples.
FIG. 11 illustrates examples of execution unit(s) circuitry.
FIG. 12 is a block diagram of a register architecture according to some examples.
FIG. 13 illustrates examples of an instruction format.
FIG. 14 illustrates examples of an addressing field.
FIG. 15 illustrates examples of a first prefix.
FIGs. 16A-D illustrate examples of how the R, X, and B fields of the first prefix in FIG. 15 are used.
FIGs. 17A-B illustrate examples of a second prefix.
FIG. 18 illustrates examples of a third prefix.
FIG. 19 is a block diagram illustrating the use of a software instruction converter to convert binary instructions in a source instruction set architecture to binary instructions in a target instruction set architecture according to examples.

### DETAILED DESCRIPTION

Embodiments discussed herein variously provide techniques and mechanisms for determining a mode of operation by which a processor is to be transitioned between power states. In various embodiments, circuitry and/or other logic provides functionality to selectively transition power management of a processor to or from an operational mode - referred to herein as a "limited power states mode" (or "LPS mode") - which reduces, to two or more, a total number of power states which are to be available to the processor. Based on a thermal condition of a system which includes the processor, the power management logic (e.g., comprising hardware, firmware, executing software and/or any of various suitable combinations thereof) configures such an LPS mode to make unavailable one or more power states which would otherwise be available when the processor is not in the LPS mode. However, multiple other power states remain available to the processor during said LPS mode.

Many existing thermal management techniques, by contrast, lock a processor to one and only one power state - e.g., to only one operational frequency - while a skin temperature (for example) is above some threshold level. In providing an LPS mode which makes two or more power states available, some embodiments variously enable an improved balance between thermal regulation and system responsiveness (e.g., user experience).

In some embodiments, a processor is configured to be operated, at various times, in any of multiple power states which each correspond to a different respective amount of power consumption by the processor. For example, some or all such power states each include, or otherwise correspond to, a different respective frequency of the processor - e.g., wherein a frequency of a clock signal is changed to facilitate a change of the processor between two such power states. Additionally or alternatively, some or all such power states each include, or otherwise correspond to, a different respective combination of one or more functional blocks of the processor each being in a respective active state, and one or more other functional blocks of the processor each being in a respective inactive state. Some or all such power states are adapted (for example) from power states which are used in any of various existing processor architectures, in various embodiments. However, some embodiments are not limited with respect to a particular plurality of power states which are available during a non-LPS mode, and/or with respect to a particular plurality of power states which are available during a LPS mode

Certain features of various embodiments are described herein with reference to a system comprising a processor which is transitioned to a LPS mode based on a thermal condition which comprises, is based on, or otherwise corresponds to, a temperature (referred to herein as a "skin temperature") of a frame, chassis, or other suitable housing structure in which the processor is disposed - e.g., along with one or more other components of the system. By way of illustration and not limitation, such a thermal condition includes, or is otherwise based on, one or more of a current skin temperature of a housing structure, an average of the skin temperature (e.g., a moving window average), an integral of the skin temperature over time, a rate of change of the skin temperature (e.g., a first order rate, a second order rate, and/or the like) and/or the like. However, in some embodiments, the thermal condition is additionally or alternatively based on any of various other suitable temperatures of the system.

In an embodiment, power management logic is configured to receive, generate or otherwise identify information which indicates, at least in part, a thermal condition for use in determining whether an LPS mode is to be configured. For example, the power management logic includes, is coupled to, or otherwise operates based on one or more sensors which provide functionality to sense an environmental characteristic that is indicative of such a thermal condition (for example, a "skin" temperature of a housing structure).

By way of illustration and not limitation, the power management logic receives or otherwise detects sensor information which identifies a current skin temperature. The power management logic determines whether a LPS mode it to be configured based on whether a current skin temperature value - or another value which is based on the current skin temperature value - is above (e.g., at or above) some threshold maximum value. In one such embodiment, the power management logic (or other suitable logic) performs an averaging operation, an integration operation, and/or any of various other suitable calculations, based on a skin temperature, to generate a value which is subsequently compared to (or otherwise evaluated based on) a corresponding threshold value.

Alternatively or in addition, the power management logic receives or otherwise detects sensor information which identifies the respective current temperature levels of one or more components that are disposed in the housing structure. In one such embodiment, the power management logic includes, or otherwise has access to, reference information which specifies relationships of multiple skin temperature levels each with a different respective set of one or more component temperature levels. For example, the reference information comprises a lookup table, a function and/or any of various other suitable types of information which identify a correspondence of skin temperature levels each with a different respective set of one or more component temperature levels. The power management logic (or other suitable logic) performs any of various look-ups, calculations, or other suitable operations to determine an estimated (or actual) skin temperature level based on the reference information and the identified one or more component temperature levels.

Alternatively or in addition, the power management logic is configured to generate, receive or otherwise identify one or more performance metrics that are indicative of a thermal condition (such as a skin temperature). In one such embodiment, the power management logic includes, or otherwise has access to, reference information which specifies relationships of multiple skin temperature levels each with a different respective set of one or more performance metric values. For example, the reference information comprises a lookup table, a function and/or any of various other suitable types of information which identify a correspondence of skin temperature levels each with a different respective set of one or more performance metric values. The power management logic (or other suitable logic) performs any of various look-ups, calculations, or other suitable operations to determine an estimated (or actual) skin temperature level based on the reference information and the identified one or more performance metric values.

In various embodiments, power management logic evaluates a detected thermal condition, based on a test criteria (e.g., including a threshold skin temperature level), to determine whether power management of a processor is to be according to a LPS mode. By way of illustration and not limitation, power management of the processor is performed, at one time during a baseline (non-LPS) mode, with a first state machine according to which the processor is variously transitioned between any of a first plurality of power states. By contrast, power management of the processor is instead performed, at another time during a LPS mode, with a second state machine according to which the processor is variously transitioned between any of a second plurality of power states. In one such embodiment, a total number of the first plurality of power states is greater than a total number of the second plurality of power states - e.g., wherein the second plurality of power states is a subset of the first plurality of power states.

As used herein, the term "relatively high power state" refers to a power state which corresponds to a level of power consumption which is greater than that to which some other (reference) power state corresponds. By contrast, the term "relatively low power state" refers to a power state which corresponds to a level of power consumption which is less than that to which some other (reference) power state corresponds. For example, the term "power increase transition" refers herein to a transition from a relatively low power state to a relatively high power state. Furthermore, the term "power decrease transition" refers herein to a transition from a relatively high power state to a relatively low power state.

In some embodiments, whether a test criteria is to be used to enable transitioning to a LPS mode - or alternatively, for transitioning from the LPS mode - is specified or otherwise indicated by an operating system (OS) hint. For example, a programmer, administrator or other suitable user provides such an OS hint to specify whether one or more particular types of workloads (e.g., workloads which tend to be relatively bursty) are to be able to avail of LPS mode functionality. Alternatively or in addition, a determination as to whether a test criteria is to be used for transitioning to (or from) a LPS mode is made based on a monitoring of core interrupts and/or wakes from a very low power state (such as a CC6 sleep state, for example). In one such embodiment, a relatively high rate of core wake events indicates that a selective use of LPS mode functionality is to be enabled.

The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including circuitry which supports a provisioning of power management functionality.

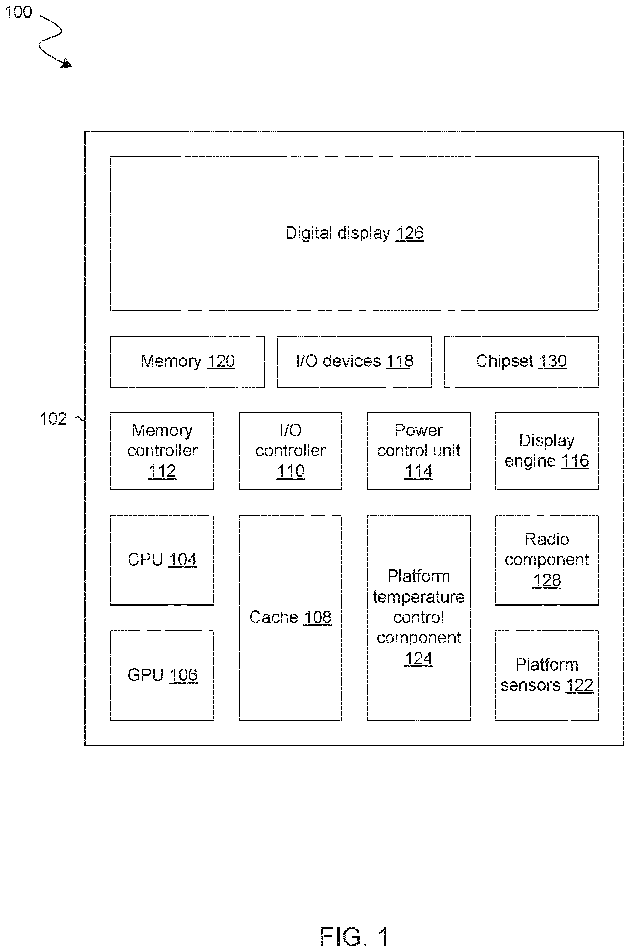

FIG. 1 shows features of a system 100 which determines a mode of processor operation based on a detected thermal condition according to an embodiment. System 100 illustrates one example of an embodiment which, based on a thermal condition, provides a mode of operation - referred to herein as a limited power states (LPS) mode - that limits a number of available power states of a processor. In various embodiments, system 100 provides functionality to perform any of various general computing, graphics processing functions, perform wireless communications, electronic imaging, and/or other such operations.

As shown in FIG. 1, the system 100 comprises a housing 102 that has disposed therein or thereon various additional components that, for example, include one or more processors. In the example embodiment shown, system 100 comprises a central processing unit (CPU) 104, a graphics processing unit (GPU) 106, cache 108, input/output (I/O) controller 110, memory controller 112, power control unit 114, display engine 116, I/O devices 118, memory 120, platform sensors 122, platform temperature control component 124, digital display 126, radio component 128 and chipset 130. A radio component is a wireless communications chip and chipset is a chip in communication with a CPU and/or GPU to perform various known control functions and/or input/output functions. The particular combination of components in housing 102 is merely illustrative, and system 100 comprises any of a variety of one or more additional components and/or one or more alternative embodiments, in other embodiments.

During operation, one or more of the components housed in system 100 generate sufficient heat to cause a temperature of housing 102 (that is, a "skin temperature" of system 100) to approach or reach a skin temperature limit - i.e., a threshold maximum skin temperature - which is designed for the system 100. For example, such a skin temperature limit is specified as a value that does not cause excessive discomfort to a user of system 100 who comes into intermittent or continuous contact with the housing 102. In some embodiments, the platform temperature control unit 124 monitors and adjusts operation of one or more components in system 100 (e.g., operation of at least one processor) based upon one or more temperature measurements which, for example, include a measurement of a temperature of housing 102. In one such embodiment, such adjusting is performed in such a manner that a steady state temperature of some or all of the one or more components does not exceed a value established to ensure that a skin temperature limit of system 100 is not exceeded.

The platform temperature control component 124 comprises various hardware elements, software elements, or a combination of both. Examples of hardware elements comprise devices, components, processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements comprise software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Whether an embodiment is implemented using hardware elements and/or software elements is based, for example, on any number of implementation-specific factors, such as desired computational rate, power levels, heat tolerances, processing cycle budget, input data rates, output data rates, memory resources, data bus speeds and other design or performance constraints, as desired for a given implementation.

In particular embodiments, the platform temperature control component 124 comprises logic at least a portion of which is in hardware and is comprised in a controller or processor. For example, the logic is comprised in a processor circuit linked to other components of system 100. In one particular example the logic forms part of a processor such as a CPU 104 and is communicatively linked to the other components of system 100. In other embodiments, the logic of the platform temperature control component 124 is located in a controller such as the power management or power control unit 114. In further embodiments, the platform temperature control component 124 is distributed across multiple platform components including cache and/or memory components.

System 100 illustrates one example of an embodiment which, as detailed herein, transitions one or more components to a mode of operation - referred to herein as a "limited power states mode" (or "LPS mode") - which includes, or otherwise enables, one or more successive alternations of a processor between a first (relatively high power consumption) power state and a second (relatively low power consumption) power state. In an embodiment, the LPS mode is configured based on the detection of a thermal condition which, for example, includes the skin temperature of housing 102 reaching or exceeding a threshold maximum skin temperature. In one such embodiment, the one or more successive alternations are to be performed according to a predetermined schedule. For example, platform temperature control component 124 includes, is coupled to, or is otherwise configured to operate with hardware, firmware and/or executing software which specifies or otherwise indicates, for each of two or more power states, a respective length of time that the power state is to be provided, during the LPS mode, before a transition to (or after a transition from) another of the two or more power states during the LPS mode.

Accordingly, some embodiments variously enable a constrained utilization of a turbo mode (or other relatively high-performance power state) while system 100 is at or near a critical thermal condition, such as a skin temperature limit. In one such embodiment, a budgeting of energy consumption is provided for improved responsiveness - e.g., where the budget is subsequently released when (for example) skin temperature is reduced to below the skin temperature limit or some other threshold temperature level. Some embodiments variously provide or otherwise utilize a dynamic platform and thermal framework (DPTF) - such as the Dynamic Tuning Technology (DTT) of Intel Corporation in Santa Clara, CA - to implement LPS mode functionality (e.g., by managing alternate power states and respective durations of said power states during a given instance of the LPS mode).

In an illustrative scenario according to one embodiment, platform sensors 122 comprise a thermal sensor which is configured to measure a skin temperature of housing 102. The thermal sensor provides an indication of the measured skin temperature to platform temperature control component 124. In an embodiment, platform temperature control component 124 performs an evaluation, based on both the indication and a test criteria (such as a threshold maximum skin temperature limit), to detect whether a test condition has been satisfied by a thermal condition of system 100. By way of illustration and not limitation, platform temperature control component 124 evaluates whether a current level of the skin temperature (of, for example, a moving average of the skin temperature) is above a threshold maximum skin temperature. In an embodiment, platform temperature control component 124 evaluates whether an integral of the skin temperature over time is above a threshold maximum level.

Where the evaluation determines that the test condition has been satisfied, platform temperature control component 124 generates one or more signals to transition one or more components of system 100 to a LPS mode. By way of illustration and not limitation, platform temperature control component 124 signals power control unit 114 (and/or other suitable circuitry of system 100) to transition a power management of CPU 104 and/or GPU 106 to from a first mode which makes relatively more power states available, to a LPS mode which makes relatively fewer power states available. In some embodiments, platform temperature control component 124 signals circuitry of CPU 104 and/or GPU 106 to implement or otherwise accommodate the LPS mode at least in part.

In various embodiments, the LPS mode makes two or more power states available to a processor, and prevents one or more other power states which would otherwise be available to the processor during a non-LPS mode of power management. In one such embodiment, CPU 104 (or GPU 106, for example) is subject to being transitioned among the two or more power states during the LPS mode. By way of illustration and not limitation, power control unit 114, CPU 104 and/or other suitable logic of system 100 provides functionality to monitor a software process which is being executed with CPU 104 - e.g., where such monitoring is to detect whether a workload of the process is to be performed with CPU 104. In an illustrative scenario according to one embodiment, such monitoring is to detect whether a mouse click, keyboard stoke or other interaction with a user interface has resulted (or is expected to result) in a need to perform a workload of the software process.

Where the monitoring results in the detection of a workload, CPU 104 is subjected to a power increase transition from a relatively low power state of the two or more power states to a relatively high power state of the two or more power states. In an illustrative scenario according to one embodiment, detection of a workload comprises detecting a start of a software task, a user key stroke or a mouse click, a start of a phase of an application, or the like. In one such embodiment, after it performs the workload in question, CPU 104 is subjected to a power decrease transition from the relatively high power state to a relatively low power state of the two or more power states. In some embodiments, a power decrease transition is performed after the expiration of predetermined period of time (e.g., 5 seconds) which begins with the completion of a given workload. Although some embodiments are not limited in this regard, CPU 104 is transitioned between some or all of the two or more power states multiple times during the LPS mode - e.g., while platform temperature control component 124 (or other suitable logic of system 100) performs additional monitoring to detect whether power management is to be transitioned from the LPS mode.

For example, during an LPS mode, platform temperature control component 124 performs an evaluation to detect whether a thermal state - e.g., a current level of the skin temperature, an average of the skin temperature, an integral of the skin temperature, or the like - is below the same (or some other) threshold level. Where the thermal state is below the threshold level in question, platform temperature control component 124 generates one or more signals to transition one or more components of system 100 from the LPS mode to another (non-LPS) mode that makes available to CPU 104 (and/or to GPU 106) a relatively large number of power states.

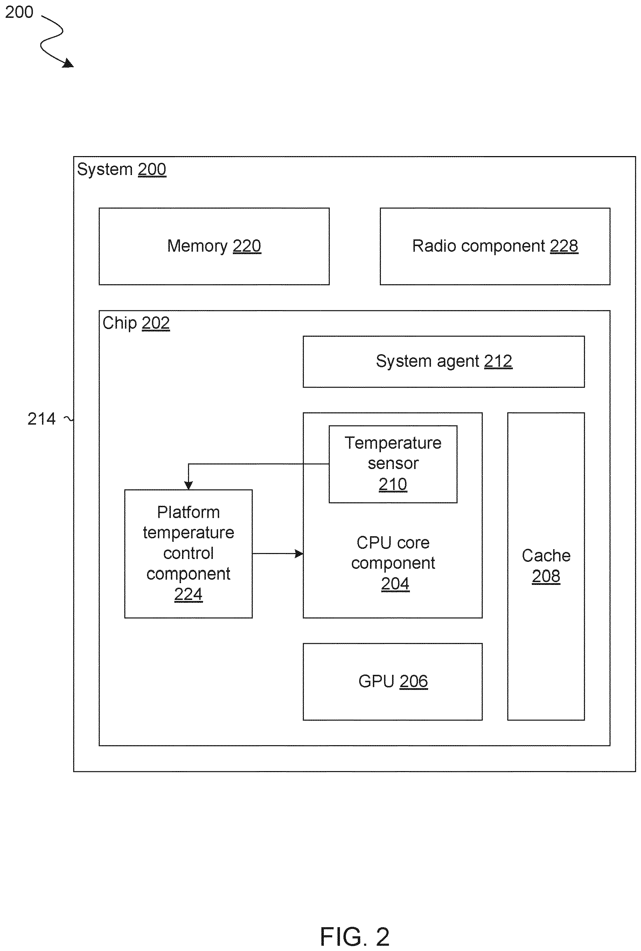

FIG. 2 shows features of a system 200 to provide a limited power states mode for managing operation of a processor according to an embodiment. System 200 illustrates one example of an embodiment wherein a determination, as to whether a LPS mode is to be configured, is performed based on an estimate of a thermal condition (in this case, an estimate of a skin temperature). In some embodiments, system 200 includes features of system 100.

As shown in FIG. 2, system 200 comprises a chip 202, memory 220 and radio component 228, which are located on separate chips within a housing 214. In this example, the chip 202 comprises a CPU core component 204, which comprises multiple processing cores that are not individually shown. The chip 202 also comprises a GPU 206, system agent 212, and cache 208. The system agent 212 performs various control and input/output functions including memory control, display control, and the like. In this embodiment a temperature sensor 210 is provided to measure temperature of CPU core component 204. For example, the temperature sensor 210 is a discrete sensor or, alternatively, is integrated in circuitry within the CPU core component 204 in some embodiments. The temperature sensor 210 is alternatively located proximate the CPU core component 204 - e.g., wherein temperature sensor 210 is thermally coupled via one or more points on the die that constitutes the chip 202 - such that temperature measurements recorded by the temperature sensor 210 provide measurement of a processor temperature (also referred to herein as a "junction temperature") with sufficient accuracy.

In the embodiment of FIG. 2, the platform temperature control component 224 is coupled to the temperature sensor 210 to monitor temperature readings produced by the temperature sensor 210 as needed. The platform temperature control component 224 further is operative to adjust power of the CPU core component 204 based upon temperature sensor data provided by the temperature sensor 210. By monitoring junction temperature using the temperature sensor 210 the actual junction temperature is recorded in real time, in some embodiments. This allows an average junction temperature to be estimated or calculated in real time to determine when the average junction temperature (for example) is approaching a present limit such as one which corresponds to a skin temperature limit for housing 214.

System 200 illustrates one example embodiment wherein a transition to an LPS mode is performed based the respective temperatures of one or more components which are within a housing structure - e.g., wherein the one or more component temperatures are indicative of whether a skin temperature of the housing structure is above a threshold maximum. For example, some embodiments use the one or more component temperatures to estimate a skin temperature of housing 214. In one such embodiment, platform temperature control component 224 includes some or all of the features of platform temperature control component 124. Additionally or alternatively, functionality such as that of power control unit 114 is provided (for example) with platform temperature control component 224 and/or CPU core component 204.

In an illustrative scenario according to one embodiment, platform temperature control component 224 or CPU core component 204 includes, is coupled to, or otherwise operates based on, reference information which specifies or otherwise indicates a correspondence of various temperature levels (e.g., various levels of a skin temperature of housing 214) each with a different respective temperature level which is determined based on information from temperature sensor 210. For example, the reference information comprises a lookup table, a function and/or any of various other suitable types of information which identify a correspondence of skin temperature levels each with a different respective level of a temperature at CPU core component 204. In one such embodiment, power management logic of platform temperature control component 224 or CPU core component 204 performs a look-up, calculation, or other suitable operation to determine an estimated (or actual) skin temperature level based on the reference information and the temperature level detected with temperature sensor 210. The skin temperature level is evaluated based on (e.g., compared to) a threshold level to determine whether power management of CPU core component 204 is to be according to a LPS mode. In one such embodiment, the LPS mode remains configured until the (actual or estimated) skin temperature level is below a predetermined threshold level.

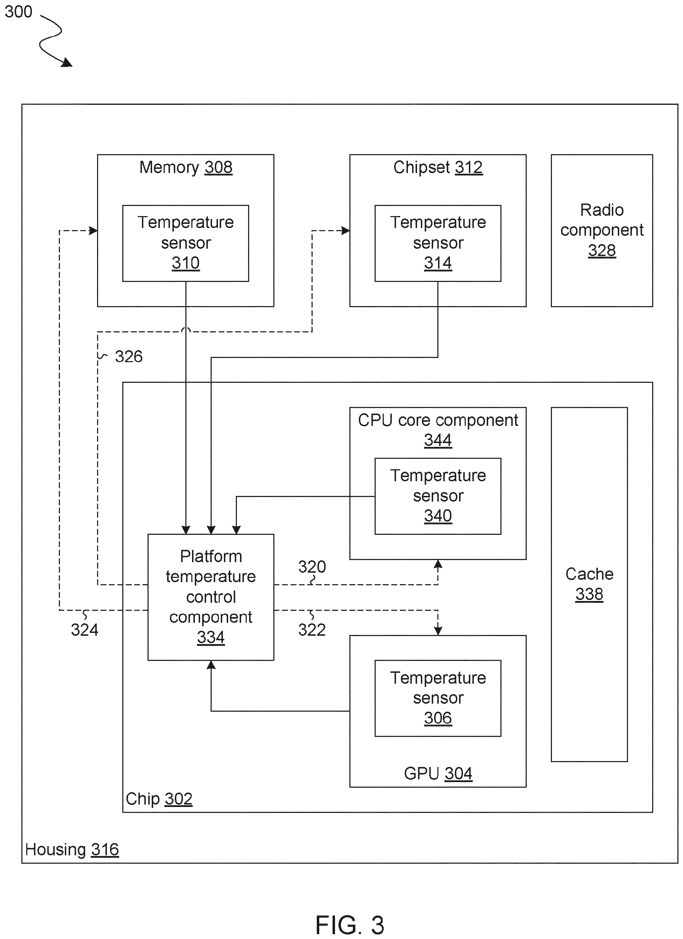

FIG. 3 shows features of a system 300 to determine power consumption by a processor according to another embodiment. FIG. 3 illustrates one example of an embodiment wherein a determination, as to whether a LPS mode is to be configured, is performed based on multiple temperatures which are variously sensed each at a different respective component in a housing structure. In one such embodiment, an evaluation is performed, based on the multiple component temperatures, to determine an estimated skin temperature (e.g., a moving average of an estimated skin temperature) of the housing structure. Where it is determined that the estimated skin temperature exceeds a threshold maximum temperature level, some embodiments transition power management to a LPS mode which makes a relatively limited number of two or more power states available to a processor. In some embodiments, system 300 includes features of system 100 or system 200.

As shown in FIG. 3, system 300 comprises a chip 302, a memory 308, a chipset 312, and a radio component 328 that are located on separate chips. In addition to a CPU core component 344 (providing functionality such as that of the CPU core component 204 in FIG. 2), the chip 302 comprises one or more components such as a cache 338, and a graphics processor 304 that comprises a temperature sensor 306 to measure temperature of the graphics processor 304. Even though the graphics processor 304 and CPU core component 344 are located together on the same chip 302, two different temperature sensors 340, 306 are provided to determine temperature more locally to each respective component, that is, CPU core component 344 and graphics processor 304.

In addition, in the embodiment of FIG. 3, the memory 308 comprises its own temperature sensor 310, while the chipset has its own temperature sensor 314. As illustrated in FIG. 3, each of the temperature sensors 340, 306, 310, and 314 is communicatively coupled to the platform temperature control component 334 (which, for example, provides functionality of platform temperature control component 124 or platform temperature control component 224). In this manner junction temperatures for each of the CPU core component 344, graphics processor 304, memory 308, and chipset 312 are monitored independently by the platform temperature control component 334. As further illustrated in FIG. 3, during operation of each or all of these components, the platform temperature control component 334 sends control signals to adjust component operation.

In an illustrative scenario according to one embodiment, a message 320 is sent to the CPU core component 344 to adjust core power consumption based on some or all of the junction temperature measurements recorded by temperature sensors 340, 306, 310, and 314. Alternatively or in addition, a message 322 is sent to the GPU 304 to adjust GPU power consumption based on some or all of the junction temperature measurements recorded by temperature sensors 340, 306, 310, and 314. Although some embodiments are not limited in this regard, another message 324 is sent to the memory 308 to adjust memory operation based on some or all of the junction temperature measurements - e.g., while a message 326 is sent to the chipset 312 to adjust chipset operation based on some or all of the junction temperature measurements. Together or separately, these adjustments allow performance of each component to be maximized consistent with maintaining skin temperature of housing 316 at or below a specified limit.

In detail, the platform temperature control component 334 receives a single set of temperature sensor measurements or multiple temperature sensor measurements to track junction temperatures - e.g., in real time - for one or more components or devices under control of a platform. In some embodiments, such one or more real time junction temperature measurements are additionally used to generate a calculated average temperature. In one such embodiment, the platform temperature control component 334 then uses the junction temperature and calculated average junction temperature values, at a given instance, to determine whether to adjust operation of the given device under control. For example, the platform temperature control component 334 stores, retrieves, or receives a set of one or more limits including, in an embodiment, a temperature limit (e.g., a skin temperature limit and/or a junction temperature limit) and/or a steady state junction temperature. In various embodiments, such one or more limits are then used to compare to junction temperature(s) and/or average junction temperature(s) of a device under control (e.g., in real time) to adjust operation of the device under control when the limits are breached.

In an illustrative scenario according to one embodiment, platform temperature control component 334 operates based on reference information which specifies or otherwise indicates a correspondence of various temperature levels (e.g., various levels of a skin temperature of housing 316) each with a different respective set of one or more temperature levels which are variously sensed with temperature sensors 340, 306, 310, and 314. In one such embodiment, platform temperature control component 334 performs a look-up, calculation, or other suitable operation to determine an estimated (or actual) skin temperature level of housing 316 based on the reference information and some or all of the temperature levels detected with temperature sensors 340, 306, 310, and 314. The skin temperature level is evaluated based on (e.g., compared to) a threshold level to determine whether power management of CPU core component 344 and/or graphics processor 304 is to be according to a LPS mode. In one such embodiment, the LPS mode remains configured until a skin temperature of housing 316 is again below some predetermined threshold level.

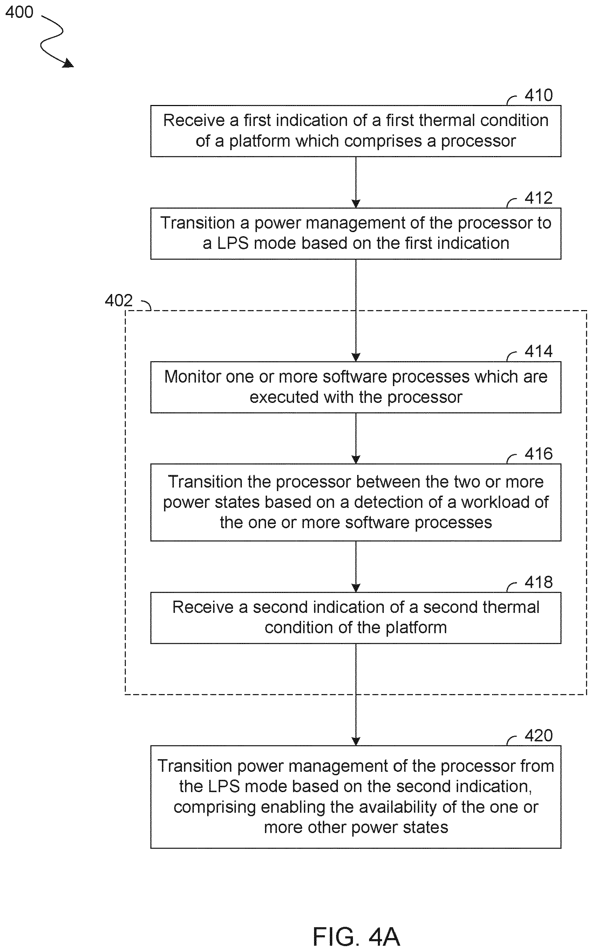

FIG. 4A shows features of a method 400 to operate power management logic according to an embodiment. The method 400 illustrates one example of an embodiment wherein a limited power states (LPS) mode of power management is implemented based on a thermal condition. The thermal condition includes or otherwise corresponds to a skin temperature of a housing structure, although other embodiments are not limited in this regard. In various embodiments, one or more operations of method 400 are performed with circuitry of one of systems 100, 200, 300. For example, method 400 is performed at least in part with CPU 104, power control unit 114, platform temperature control component 124 and/or other suitable hardware of system 100.

As shown in FIG. 4A, method 400 comprises (at 410) receiving a first indication of a first thermal condition of a platform which comprises a processor. For example, the platform comprises a housing structure and various components (including the processor) disposed therein - e.g., wherein the first indication includes one or more temperatures which are each measured at a respective one of the components or at the housing structure.

In one such embodiment, the first indication includes, or is otherwise determined based on, a value which represents a direct sensing of a skin temperature of the housing structure. Alternatively or in addition, the first indication includes, or is otherwise determined based on, a value which represents a direct sensing of a temperature of another structure (e.g., a component) which is disposed within the housing structure - e.g., wherein a value of a component temperature corresponds to or otherwise indicates, at least in part, a skin temperature of the housing structure. Alternatively or in addition, the first indication includes a value which represents a metric of performance and/or power consumption by some or all of the one or more components - e.g., wherein a value of the metric of performance corresponds to or otherwise indicates, at least in part, a skin temperature of the housing structure.

Based on the first indication which is received at 410, method 400 (at 412) transitions a power management of the processor to a limited power states (LPS) mode. For example, in some embodiments, method 400 further comprises performing one or more evaluations, based on the first indication, to identify the first thermal condition, and to detect whether the first thermal condition satisfies a first test condition for configuring the LPS mode. In one such embodiment, the evaluation comprises comparing the first indication (or a value which is generated based on the first indication) to a threshold value, such as a threshold maximum skin temperature. In various embodiments, the one or more evaluations comprise (or are based on) the performance of a look-up, calculation or any of various other suitable operations to identify the first thermal condition. By way of illustration and not limitation, the one or more evaluations comprise performing one or more of an averaging operation, an integral operation, and a calculation of a rate of change (e.g., a first order rate, a second order rate, or the like) based on a value of the first indication.

In various embodiments, two or more power states of the processor are allowed during the LPS mode, wherein one or more other power states of the processor (which, for example, are otherwise to be made available during an alternative power management mode) are prevented during the LPS mode. For example, the two or more power states comprise only two power states. In one embodiment, some or all of the one or more other power states (e.g., every one of the one or more other power states) are each a relatively high power state, as compared to others of the two or more power states. In one such embodiment, transitioning the power management to the LPS mode comprises (or otherwise results in) transitioning the processor from one of the one or more power states to a relatively low power one (e.g., a lowest power one) of the two or more power states.

In various embodiments, method 400 additionally or alternatively comprises operations 402 which are performed during the LPS mode to which the power management is transitioned at 412. By way of illustration and not limitation, during the LPS mode which is configured at 412, operations 402 (at 414) monitor one or more software processes which are executed with the processor. In one such embodiment, the monitoring at 414 is to detect for a pendency of a workload (if any) of the one or more software processes. Based on the detection of such a workload, operations 402 (at 416) transition the processor between the two or more power states which are made available by the LPS mode - e.g., wherein the transition at 416 is a power increase transition.

In some embodiments, operations 402 further comprise detecting a completion of a workload by the processor and, based on the completion, transitioning the processor between the two or more power states (e.g., wherein said transitioning comprises a power decrease transition). In one such embodiment, the processor is transitioned multiple times between the two or more power states during the LPS mode - e.g., wherein power increase transitions during the LPS mode are each to facilitate a different respective workload, and wherein power increase transitions during the LPS mode are each based on a completion of a different respective workload.

In some embodiments, operations 402 further comprise (or are performed during) a monitoring to detect for the satisfying of a test condition which indicates that the current instance of the LPM mode is to be ended. By way of illustration and not limitation, operations 402 further comprise (at 418) receiving a second indication of a second thermal condition of the platform. In one such embodiment, the second indication includes, or is otherwise determined based on, a more recent value of the temperature, metric or other characteristic which was previously represented by the first indication.

In one such embodiment, method 400 further comprises performing one or more additional evaluations, based on the second indication, to identify the second thermal condition, and to detect whether the second thermal condition satisfies a second test condition for terminating a current instance of the LPS mode. For example, the one or more additional evaluations compare the second indication (or a value which is generated based on the second indication) to a threshold value, such as a threshold minimum skin temperature for remaining in the LPS mode. In various embodiments, the one or more additional evaluations comprise (or are based on) the performance of a look-up, calculation or any of various other suitable operations to identify the second thermal condition. By way of illustration and not limitation, the one or more additional evaluations comprise performing one or more of an averaging operation, an integral operation, and a calculation of a rate of change (e.g., a first order rate, a second order rate, or the like) based on a value of the second indication.

Based on the second indication, method 400 (at 420) transitions the power management of the processor from the LPS mode. In an embodiment, the transition at 420 comprises increasing a total number of power states which are to be available to the processor - e.g., by allowing the one or more power states which are prevented during the LPS mode. In one such embodiment, the transitioning at 420 includes (or results in) a power increase transition of the processor from one of the two or more power states to a previously prevented power state.

In some embodiments, during another (non-LPS) mode - e.g., prior to the transition at 412 - power management of the processor is performed with a first state machine according to which the processor is variously transitioned between any of a first plurality of power states. By contrast, during the LPS mode - e.g., after the transition at 412 - power management of the processor is instead performed with a second state machine according to which the processor is variously transitioned between any of a second plurality of power states. A total number of the first plurality of power states is greater than a total number of the second plurality of power states - e.g., wherein the second plurality of power states is a subset of the first plurality of power states. In one such embodiment, the transition at 412 comprises resuming power management of the processor with the first state machine (i.e., in lieu of continuing power management with the second state machine).

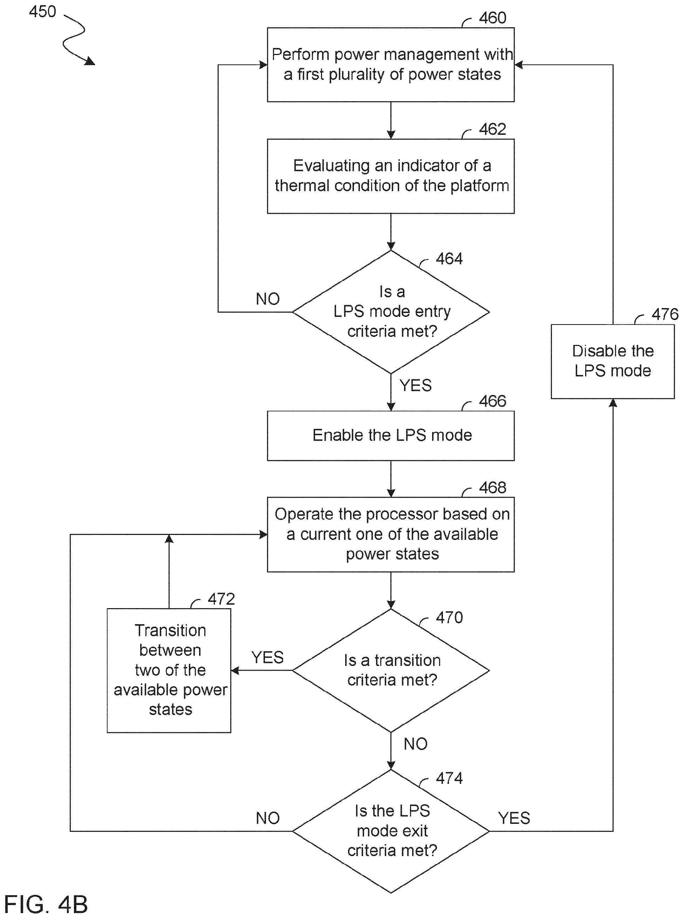

FIG. 4B shows features of a method 450 to operate power management logic according to an embodiment. Operations such as those of method 450 are performed with any of various combinations of suitable hardware (e.g., circuitry) and/or executing software which, for example, provide some or all of the functionality of one of systems 100, 200, 300. Additionally or alternatively, method 450 includes features of method 400.

As shown in FIG. 4B, method 450 comprises (at 460) performing power management with a first plurality of power states which are selectively made available to a processor during a non-LPS mode. In an embodiment, each of the first plurality of power states is an "available" power state during the non-LPS mode. For example, power management during the non-LPS mode is based on first state machine according to which the processor is to be variously transitioned among (e.g., between any of) the first plurality of power states over time.

Method 450 further comprises (at 462) evaluating an indicator of a thermal condition of the platform. For example, the indicator which is evaluated at 462 is the first indicator that is received at 410 in method 400. Method 450 further comprises (at 464) determining, based on the evaluation at 462, whether a test criteria - referred to herein as a "LPS mode entry criteria" - has been met (or, for example, is expected to be met). In one such embodiment, the determining at 464 comprises comparing the indicator of the thermal condition (or a value which is identified based on said indicator) to a threshold value, such as a threshold maximum skin temperature value.

Where it is determined at 464 that the LPS mode entry criteria has not been met, method 450 continues to perform power management (at 460), according to the non-LPS mode, with the first plurality of power states. Where it is instead determined at 464 that the LPS mode entry criteria has been met, method 450 enables the LPS mode (at 466). In an embodiment, two or more power states are available to the processor during the LPS mode, whereas one or more of the first plurality of power states are prevented (and thus unavailable) during the LPS mode. For example, enabling the LPS mode at 466 comprises transitioning between performing power state selection based on a first state machine to performing power state selection based on a second state machine. In one such embodiment, the second state machine enables a relatively limited number of a second plurality of power states, as compared to a total number of the first plurality of power states.

During the LPS mode (which is enabled at 466), method 450 (at 468) operates the processor based on a current one of the available two or more power states. While the processor remains in the current one of the available power states, method 450 performs an evaluation (at 470) to determine whether at least some power state transition criteria (e.g., any of multiple currently enabled power state transition criteria) has been met. For example, the evaluation at 470 includes (or is otherwise based on) a monitoring of a software process, which is executed with the processor, to detect for the pendency of a workload (if any).

Where it is determined at 470 that a transition criteria has been met, method 450 transitions the processor between two of the available two or more power states (at 472), and then operates the processor (at 468) based on the currently configured power state. In an illustrative scenario according to one embodiment, the evaluation at 470 detects the pendency of a software workload, wherein the transition at 472 is a power increase transition. In an alternative scenario, the evaluation at 470 detects the completion of a software workload with the processor, wherein the transition at 472 is a power decrease transition.

Where it is instead determined at 470 that no transition criteria has been met, method 450 performs another evaluation (at 474) to determine whether another test criteria - referred to herein as a "LPS mode exit criteria" - has been met. For example, the evaluating at 474 comprises determining whether a skin temperature of a housing structure (or other suitable thermal condition) is below some threshold minimum level for the power management to remain in the LPS mode.

Where it is determined at 474 that the LPS mode exit criteria has not been met, method 450 continues to operate the processor (at 468) based on the current one of the available two or more power states. Where it is instead determined at 474 that the LPS mode exit criteria has been met, method 450 disables the LPS mode (at 476). In one such embodiment, the disabling at 476 increases a total number of power states which are to be made available to the processor. For example, disabling the LPS mode at 476 comprises transitioning between performing power state selection based on the second state machine (described above) to performing power state selection based on the first state machine. After the LPS mode is disabled at 476, method 450 again perform power management (at 460) based on the (relatively large) first plurality of power states.

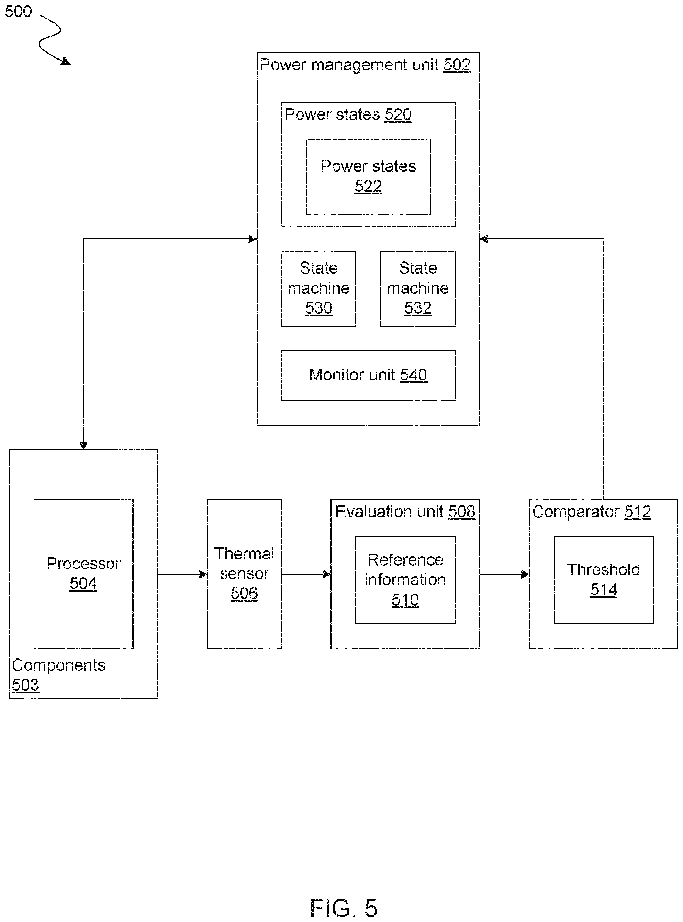

FIG. 5 shows features of a system 500 to configure a limited power states mode of power management according to an embodiment. In various embodiments, system 500 provides functionality such as that of one of systems 100, 200, 300 - e.g., wherein one or more operations of method 400 or method 450 are performed with system 500.

As shown in FIG. 5, system 500 comprises a power management unit 502 which is coupled to manage one or more components (represented as the illustrative components 503 shown) that include a processor 504. The illustrated processor 504 is a CPU, GPU, or the like, in some embodiments. System 500 further comprises one or more sensors (such as the illustrative thermal sensor 506 shown) which are coupled to sense environmental conditions, power/performance metrics and/or other information that include or otherwise indicate a thermal condition of system 500. In one such embodiment, the thermal condition includes, or is otherwise indicative of, a skin temperature of a housing structure (not shown) in which components 503 are disposed.

Thermal sensor 506 provides an indicator of the thermal condition to an evaluation unit 508 of system 500. Evaluation unit 508 comprises logic (e.g., circuit hardware, firmware and/or executing software) which performs one or more look-ups, calculations and/or other suitable operations to identify the thermal condition based on the indicator received from thermal sensor 506.

In an illustrative scenario according to one embodiment, evaluation unit 508 is operable to calculate, based on sensor information from thermal sensor 506, an average skin temperature value, an integral of skin temperature values over time, a rate of change of skin temperature values, and/or the like. Alternatively or in addition, evaluation unit 508 includes, or is otherwise coupled to access, reference information 510 which specifies or otherwise indicates a correspondence of various values - e.g., values of a temperature, a performance metric, and/or any of various other suitable characteristic - each with a different respective value of a skin temperature (or other such thermal condition which is to be a basis for providing a LPS mode). In an illustrative scenario according to one embodiment, reference information 510 includes a table (or other suitable data structure) which identifies a correspondence of one or more temperatures of components 503 to a particular level of the skin temperature. In one such embodiment, reference information 510 indicates that if some components A, B, ..., X of components 503 are at temperature levels ta1, tb1, ..., tx1 (respectively), then the housing structure is at a skin temperature level Tsk1. Furthermore, reference information 510 indicates that if components A, B, ..., X are instead at temperature levels ta2, tb2, ..., tx2 (respectively), then the housing structure is at different skin temperature level Tsk2.

Based on a calculation, a table look-up and/or any of various other suitable operations, evaluation unit 508 provides, to a comparator 512 of system 500, a value (or values) which identifies a thermal condition of system 500, such as a skin temperature of the housing structure. Comparator 512 provides functionality to compare such a value to a threshold 514 (such as a threshold maximum skin temperature) - e.g., wherein such comparison is to determine whether a test criteria for entering a LPS mode (or alternatively, a test criteria for exiting the LPS mode) has been satisfied or is expected to be satisfied.

In one such embodiment, comparator 512 indicates, to a monitor unit 540 of the power management unit 502, the satisfaction of a LPS mode entry criteria (or, for example, the satisfaction of a LPS mode exit criteria). Based on such an indication from comparator 512, power management by system 500 - e.g., including monitor unit 540, power management of processor 504 and/or power management of one or more others of components 503 - is transitioned between two or more power management modes comprising a first (non-LPS) mode and a second (LPS) mode.

In an illustrative scenario according to one embodiment, the first mode makes a first plurality of power states 520 available to processor 504 - e.g., wherein, during the first mode, each of power states 520 is a candidate for being a possible power state of processor 504. By contrast, the second (LPS) mode makes a second plurality of power states 520 available to processor 504, wherein a total number of the first plurality of power states 520 is greater than a total number of the second plurality of power states 522. In the example embodiment shown, power states 522 are a subset of power states 520 - e.g., power states 520 further comprises one or more additional power states other than any of power states 522.

By way of illustration and not limitation, during the first (non-LPS) mode, power management of processor 504 is performed with a state machine 530 of power management unit 502 (or alternatively, of processor 504), which facilitates various transitions of processor 504 between any of power states 520. By contrast, during the second (LPS) mode, power management of processor 504 is performed with a state machine 532 of power management unit 502 (or of processor 504), wherein state machine 532 facilitates various transitions of processor 504 between any of power states 522.

In some embodiments, a first power state of power states 520 (other than any of the power states 522) is a prevented power state during the second (LPS mode) - i.e., wherein processor 504 is prevented from transitioning to the first power state during the second mode. In one such embodiment, the first power state is a relatively high power state, as compared to each of the power states 522. In an illustrative scenario according to one embodiment, the first (non-LPS) mode enables power management unit 502, processor 504, or other suitable logic of system 500, to use a first test criteria for determining whether processor 504 is to transition to (or alternatively, from) said first power state. However, such use of the first test criteria is disabled during the second (LPS) mode. For example, the first (non-LPS) mode prevents any evaluation, based on the first test criteria, from triggering a transition of processor 504 to (or alternatively, from) the first power state. By way of illustration and not limitation, such evaluation - which, for example, comprises comparing a threshold value another value which represents an identified thermal condition - is disabled during the first (non-LPS) mode. In one such embodiment, monitoring to identify the thermal condition is also disabled during the first mode.

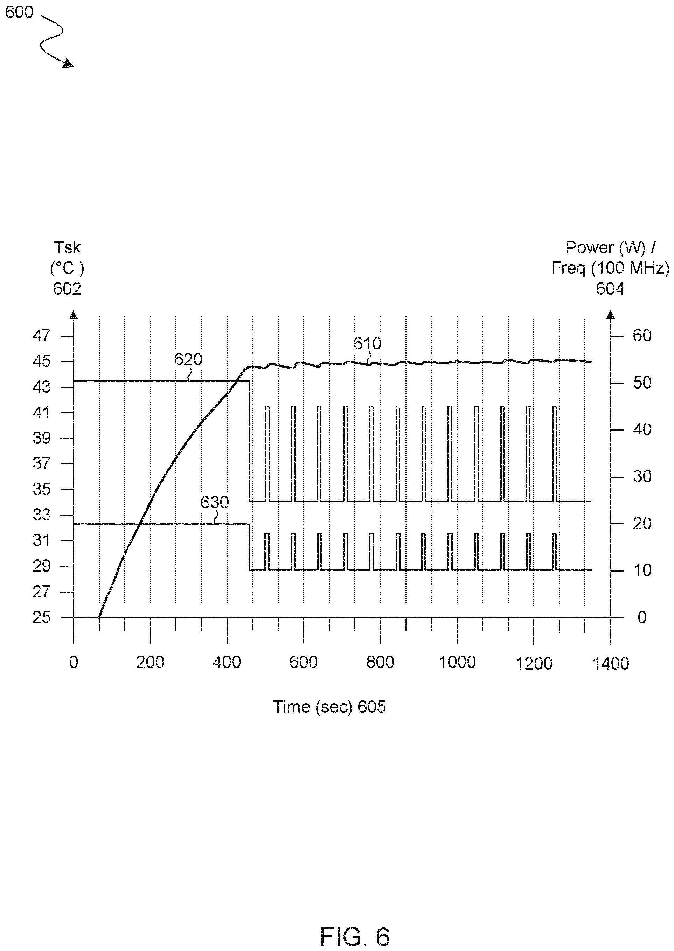

FIG. 6 shows a graph 600 illustrating operations to transition a processor between power states according to an embodiment. Graph 600 illustrates a transition of a power management to a limited power states (LPS) mode according to which a processor is able to be transitioned between two or more power states. In various embodiments, graph 600 represents power management at one of systems 100, 200, 300, 500 - e.g., wherein one or more operations of method 400 or method 450 include, or otherwise result in, features shown in graph 600.

As shown in FIG. 6, graph 600 includes a first plot 610 illustrating changes to a skin temperature (Tsk) 602 (such as that of housing 102) during a time 605. Graph 600 further includes a second plot 630 and a third plot 630 which variously represent power state transitions by a processor (such as CPU 104 or GPU 106) during the time 605. More particularly, plot 620 represents changes to an operating frequency of the processor during time 605, whereas plot 630 represents changes to an amount of power consumed by the processor during time 605. In FIG. 6, the axis 604 of graph 600 represents both the consumed power and the operating frequency - i.e., wherein 1 Watt (W) of consumed power corresponds to 100 Megahertz (MHz) of the operating frequency along axis 604.

As illustrated by plot 610 in graph 600, in a first portion of time 605, the processor is operated in a first (relatively high) power state which includes, or otherwise corresponds to, an operating frequency of approximately 5 Gigahertz (GHz), and approximately 20 W of power consumption. During this first portion of time 605, the skin temperature Tsk steadily increases until is exceeds a threshold maximum value which, in this example embodiment, is equal to 44 degrees Celsius (°C). Based on the skin temperature Tsk exceeding this threshold maximum value, power management of the processor is transitioned from a first (non-LPS) mode to a second (LPS) mode. By way of illustration and not limitation, the second mode enables a second power state and a third power state to be available to the processor, while the first power state is to be a prevented (that is, unavailable) at least during the LPS mode.

In the example embodiment shown, the second power state includes, or otherwise corresponds to, an operating frequency of approximately 2.5 GHz, and approximately 10 W of power consumption. By contrast, the third power state includes, or otherwise corresponds to, an operating frequency of approximately 4.5 GHz, and approximately 17.5 W of power consumption. In some embodiments, the second power management mode makes any of a variety of additional or alternative power states available to the processor (while preventing at least the first power state, for example).

During the second (LPS) mode, the processor is subject to being transitioned between the second power state and the third power state one or more times - e.g., until the skin temperature (Tsk) again falls below the threshold maximum value (or below some other threshold temperature). By way of illustration and not limitation, multiple power increase transitions - from the second power state to the third power state - are variously performed during the second mode, where each such transition is to facilitate the performance of a different respective workload by the processor. In one such embodiment, multiple power decrease transitions - from the third power state to the second power state - are also variously performed during the second mode, where each such transition is after the completion of a different respective workload by the processor.

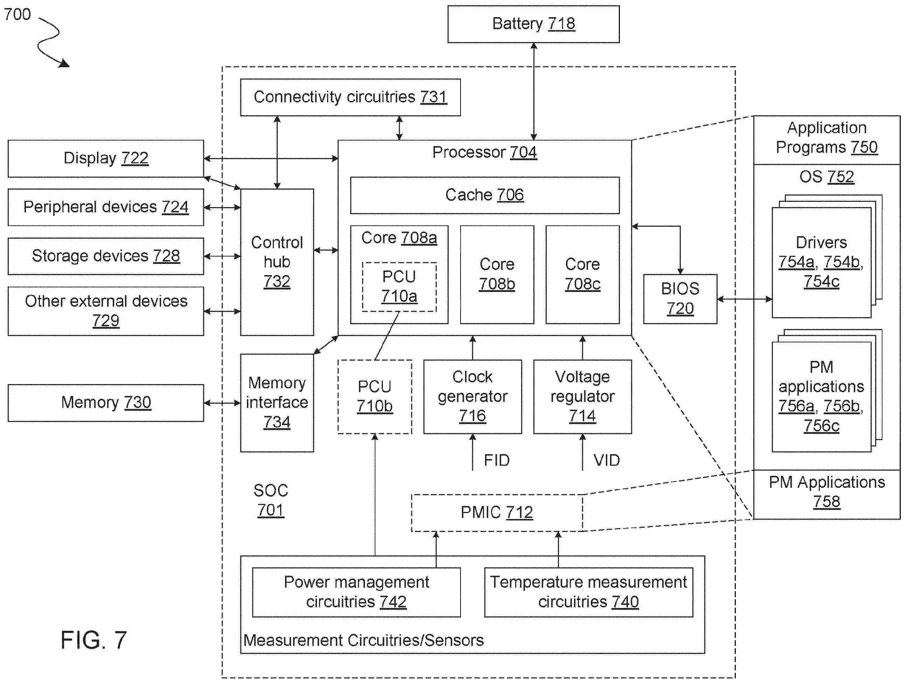

FIG. 7 illustrates a computer system or computing device 700 (also referred to as device 700), where power management of a processor is conditionally performed according to a limited power states (LPS) mode, in accordance with some embodiments. It is pointed out that those elements of FIG. 7 having the same reference numbers (or names) as the elements of any other figure can operate or function in any manner similar to that described, but are not limited to such.

In some embodiments, device 700 represents an appropriate computing device, such as a computing tablet, a mobile phone or smart-phone, a laptop, a desktop, an Internet-of- Things (IOT) device, a server, a wearable device, a set-top box, a wireless-enabled e-reader, or the like. It will be understood that certain components are shown generally, and not all components of such a device are shown in device 700.

In an example, the device 700 comprises a SoC (System-on-Chip) 701. An example boundary of the SOC 701 is illustrated using dotted lines in FIG. 7, with some example components being illustrated to be included within SOC 701 - however, SOC 701 may include any appropriate components of device 700.

In some embodiments, device 700 includes processor 704. Processor 704 can include one or more physical devices, such as microprocessors, application processors, microcontrollers, programmable logic devices, processing cores, or other processing means. The processing operations performed by processor 704 include the execution of an operating platform or operating system on which applications and/or device functions are executed. The processing operations include operations related to I/O (input/output) with a human user or with other devices, operations related to power management, operations related to connecting computing device 700 to another device, and/or the like. The processing operations may also include operations related to audio I/O and/or display I/O.

In some embodiments, processor 704 includes multiple processing cores (also referred to as cores) 708a, 708b, 708c. Although merely three cores 708a, 708b, 708c are illustrated in FIG. 7, the processor 704 may include any other appropriate number of processing cores, e.g., tens, or even hundreds of processing cores. Processor cores 708a, 708b, 708c may be implemented on a single integrated circuit (IC) chip. Moreover, the chip may include one or more shared and/or private caches, buses or interconnections, graphics and/or memory controllers, or other components.

In some embodiments, processor 704 includes cache 706. In an example, sections of cache 706 may be dedicated to individual cores 708 (e.g., a first section of cache 706 dedicated to core 708a, a second section of cache 706 dedicated to core 708b, and so on). In an example, one or more sections of cache 706 may be shared among two or more of cores 708. Cache 706 may be split in different levels, e.g., level 1 (L1) cache, level 2 (L2) cache, level 3 (L3) cache, etc.

In some embodiments, a given processor core (e.g., core 708a) may include a fetch unit to fetch instructions (including instructions with conditional branches) for execution by the core 708a. The instructions may be fetched from any storage devices such as the memory 730. Processor core 708a may also include a decode unit to decode the fetched instruction. For example, the decode unit may decode the fetched instruction into a plurality of micro-operations. Processor core 708a may include a schedule unit to perform various operations associated with storing decoded instructions. For example, the schedule unit may hold data from the decode unit the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, an execution unit may execute instructions out-of-order. Hence, processor core 708a (for example) may be an out-of-order processor core in one embodiment. Processor core 708a may also include a retirement unit. The retirement unit may retire executed instructions after they are committed. In an embodiment, retirement of the executed instructions may result in processor state being committed from the execution of the instructions, physical registers used by the instructions being de-allocated, etc. The processor core 708a may also include a bus unit to enable communication between components of the processor core 708a and other components via one or more buses. Processor core 708a may also include one or more registers to store data accessed by various components of the core 708a (such as values related to assigned app priorities and/or sub-system states (modes) association.

In some embodiments, device 700 comprises connectivity circuitries 731. For example, connectivity circuitries 731 includes hardware devices (e.g., wireless and/or wired connectors and communication hardware) and/or software components (e.g., drivers, protocol stacks), e.g., to enable device 700 to communicate with external devices. Device 700 may be separate from the external devices, such as other computing devices, wireless access points or base stations, etc.

In an example, connectivity circuitries 731 may include multiple different types of connectivity. To generalize, the connectivity circuitries 731 may include cellular connectivity circuitries, wireless connectivity circuitries, etc. Cellular connectivity circuitries of connectivity circuitries 731 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 731 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 731 may include a network interface, such as a wired or wireless interface, e.g., so that a system embodiment may be incorporated into a wireless device, for example, cell phone or personal digital assistant.

In some embodiments, device 700 comprises control hub 732, which represents hardware devices and/or software components related to interaction with one or more I/O devices. For example, processor 704 may communicate with one or more of display 722, one or more peripheral devices 724, storage devices 728, one or more other external devices 729, etc., via control hub 732. Control hub 732 may be a chipset, a Platform Control Hub (PCH), and/or the like.

For example, control hub 732 illustrates one or more connection points for additional devices that connect to device 700, e.g., through which a user might interact with the system. For example, devices (e.g., devices 729) that can be attached to device 700 include microphone devices, speaker or stereo systems, audio devices, video systems or other display devices, keyboard or keypad devices, or other I/O devices for use with specific applications such as card readers or other devices.

As mentioned above, control hub 732 can interact with audio devices, display 722, etc. For example, input through a microphone or other audio device can provide input or commands for one or more applications or functions of device 700. Additionally, audio output can be provided instead of, or in addition to display output. In another example, if display 722 includes a touch screen, display 722 also acts as an input device, which can be at least partially managed by control hub 732. There can also be additional buttons or switches on computing device 700 to provide I/O functions managed by control hub 732. In one embodiment, control hub 732 manages devices such as accelerometers, cameras, light sensors or other environmental sensors, or other hardware that can be included in device 700. The input can be part of direct user interaction, as well as providing environmental input to the system to influence its operations (such as filtering for noise, adjusting displays for brightness detection, applying a flash for a camera, or other features).

In some embodiments, control hub 732 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 722 represents hardware (e.g., display devices) and software (e.g., drivers) components that provide a visual and/or tactile display for a user to interact with device 700. Display 722 may include a display interface, a display screen, and/or hardware device used to provide a display to a user. In some embodiments, display 722 includes a touch screen (or touch pad) device that provides both output and input to a user. In an example, display 722 may communicate directly with the processor 704. Display 722 can be one or more of an internal display device, as in a mobile electronic device or a laptop device or an external display device attached via a display interface (e.g., DisplayPort, etc.). In one embodiment display 722 can be a head mounted display (HMD) such as a stereoscopic display device for use in virtual reality (VR) applications or augmented reality (AR) applications.

In some embodiments and although not illustrated in the figure, in addition to (or instead of) processor 704, device 700 may include Graphics Processing Unit (GPU) comprising one or more graphics processing cores, which may control one or more aspects of displaying contents on display 722.

Control hub 732 (or platform controller hub) may include hardware interfaces and connectors, as well as software components (e.g., drivers, protocol stacks) to make peripheral connections, e.g., to peripheral devices 724.

It will be understood that device 700 could both be a peripheral device to other computing devices, as well as have peripheral devices connected to it. Device 700 may have a "docking" connector to connect to other computing devices for purposes such as managing (e.g., downloading and/or uploading, changing, synchronizing) content on device 700. Additionally, a docking connector can allow device 700 to connect to certain peripherals that allow computing device 700 to control content output, for example, to audiovisual or other systems.

In addition to a proprietary docking connector or other proprietary connection hardware, device 700 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 731 may be coupled to control hub 732, e.g., in addition to, or instead of, being coupled directly to the processor 704. In some embodiments, display 722 may be coupled to control hub 732, e.g., in addition to, or instead of, being coupled directly to processor 704.

In some embodiments, device 700 comprises memory 730 coupled to processor 704 via memory interface 734. Memory 730 includes memory devices for storing information in device 700. Memory can include nonvolatile (state does not change if power to the memory device is interrupted) and/or volatile (state is indeterminate if power to the memory device is interrupted) memory devices. Memory device 730 can be a dynamic random access memory (DRAM) device, a static random access memory (SRAM) device, flash memory device, phase-change memory device, or some other memory device having suitable performance to serve as process memory. In one embodiment, memory 730 can operate as system memory for device 700, to store data and instructions for use when the one or more processors 704 executes an application or process. Memory 730 can store application data, user data, music, photos, documents, or other data, as well as system data (whether long-term or temporary) related to the execution of the applications and functions of device 700.

Elements of various embodiments and examples are also provided as a machine-readable medium (e.g., memory 730) for storing the computer-executable instructions (e.g., instructions to implement any other processes discussed herein). The machine-readable medium (e.g., memory 730) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 700 comprises temperature measurement circuitries 740, e.g., for measuring temperature of various components of device 700. In an example, temperature measurement circuitries 740 may be embedded, or coupled or attached to various components, whose temperature are to be measured and monitored. For example, temperature measurement circuitries 740 may measure temperature of (or within) one or more of cores 708a, 708b, 708c, voltage regulator 714, memory 730, a mother-board of SOC 701, and/or any appropriate component of device 700.

In some embodiments, device 700 comprises power measurement circuitries 742, e.g., for measuring power consumed by one or more components of the device 700. In an example, in addition to, or instead of, measuring power, the power measurement circuitries 742 may measure voltage and/or current. In an example, the power measurement circuitries 742 may be embedded, or coupled or attached to various components, whose power, voltage, and/or current consumption are to be measured and monitored. For example, power measurement circuitries 742 may measure power, current and/or voltage supplied by one or more voltage regulators 714, power supplied to SOC 701, power supplied to device 700, power consumed by processor 704 (or any other component) of device 700, etc.

In some embodiments, device 700 comprises one or more voltage regulator circuitries, generally referred to as voltage regulator (VR) 714. VR 714 generates signals at appropriate voltage levels, which may be supplied to operate any appropriate components of the device 700. Merely as an example, VR 714 is illustrated to be supplying signals to processor 704 of device 700. In some embodiments, VR 714 receives one or more Voltage Identification (VID) signals, and generates the voltage signal at an appropriate level, based on the VID signals. Various type of VRs may be utilized for the VR 714. For example, VR 714 may include a "buck" VR, "boost" VR, a combination of buck and boost VRs, low dropout (LDO) regulators, switching DC-DC regulators, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR which is controlled by PCU 710a/b and/or PMIC 712. In some embodiments, each core has a network of distributed LDOs to provide efficient control for power management. The LDOs can be digital, analog, or a combination of digital or analog LDOs.

In some embodiments, device 700 comprises one or more clock generator circuitries, generally referred to as clock generator 716. Clock generator 716 generates clock signals at appropriate frequency levels, which may be supplied to any appropriate components of device 700. Merely as an example, clock generator 716 is illustrated to be supplying clock signals to processor 704 of device 700. In some embodiments, clock generator 716 receives one or more Frequency Identification (FID) signals, and generates the clock signals at an appropriate frequency, based on the FID signals.

In some embodiments, device 700 comprises battery 718 supplying power to various components of device 700. Merely as an example, battery 718 is illustrated to be supplying power to processor 704. Although not illustrated in the figures, device 700 may comprise a charging circuitry, e.g., to recharge the battery, based on Alternating Current (AC) power supply received from an AC adapter.

In some embodiments, device 700 comprises Power Control Unit (PCU) 710 (also referred to as Power Management Unit (PMU), Power Controller, etc.). In an example, some sections of PCU 710 may be implemented by one or more processing cores 708, and these sections of PCU 710 are symbolically illustrated using a dotted box and labelled PCU 710a. In an example, some other sections of PCU 710 may be implemented outside the processing cores 708, and these sections of PCU 710 are symbolically illustrated using a dotted box and labelled as PCU 710b. PCU 710 may implement various power management operations for device 700. PCU 710 may include hardware interfaces, hardware circuitries, connectors, registers, etc., as well as software components (e.g., drivers, protocol stacks), to implement various power management operations for device 700.

In some embodiments, device 700 comprises Power Management Integrated Circuit (PMIC) 712, e.g., to implement various power management operations for device 700. In some embodiments, PMIC 712 is a Reconfigurable Power Management ICs (RPMICs) and/or an IMVP (Intel^{®} Mobile Voltage Positioning). In an example, the PMIC is within an IC chip separate from processor 704. The may implement various power management operations for device 700. PMIC 712 may include hardware interfaces, hardware circuitries, connectors, registers, etc., as well as software components (e.g., drivers, protocol stacks), to implement various power management operations for device 700.

In an example, device 700 comprises one or both PCU 710 or PMIC 712. In an example, any one of PCU 710 or PMIC 712 may be absent in device 700, and hence, these components are illustrated using dotted lines.

Various power management operations of device 700 may be performed by PCU 710, by PMIC 712, or by a combination of PCU 710 and PMIC 712. For example, PCU 710 and/or PMIC 712 may select a power state (e.g., P-state) for various components of device 700. For example, PCU 710 and/or PMIC 712 may select a power state (e.g., in accordance with the ACPI (Advanced Configuration and Power Interface) specification) for various components of device 700. Merely as an example, PCU 710 and/or PMIC 712 may cause various components of the device 700 to transition to a sleep state, to an active state, to an appropriate C state (e.g., C0 state, or another appropriate C state, in accordance with the ACPI specification), etc. In an example, PCU 710 and/or PMIC 712 may control a voltage output by VR 714 and/or a frequency of a clock signal output by the clock generator, e.g., by outputting the VID signal and/or the FID signal, respectively. In an example, PCU 710 and/or PMIC 712 may control battery power usage, charging of battery 718, and features related to power saving operation.

The clock generator 716 can comprise a phase locked loop (PLL), frequency locked loop (FLL), or any suitable clock source. In some embodiments, each core of processor 704 has its own clock source. As such, each core can operate at a frequency independent of the frequency of operation of the other core. In some embodiments, PCU 710 and/or PMIC 712 performs adaptive or dynamic frequency scaling or adjustment. For example, clock frequency of a processor core can be increased if the core is not operating at its maximum power consumption threshold or limit. In some embodiments, PCU 710 and/or PMIC 712 determines the operating condition of each core of a processor, and opportunistically adjusts frequency and/or power supply voltage of that core without the core clocking source (e.g., PLL of that core) losing lock when the PCU 710 and/or PMIC 712 determines that the core is operating below a target performance level. For example, if a core is drawing current from a power supply rail less than a total current allocated for that core or processor 704, then PCU 710 and/or PMIC 712 can temporarily increase the power draw for that core or processor 704 (e.g., by increasing clock frequency and/or power supply voltage level) so that the core or processor 704 can perform at a higher performance level. As such, voltage and/or frequency can be increased temporality for processor 704 without violating product reliability.

In an example, PCU 710 and/or PMIC 712 may perform power management operations, e.g., based at least in part on receiving measurements from power measurement circuitries 742, temperature measurement circuitries 740, charge level of battery 718, and/or any other appropriate information that may be used for power management. To that end, PMIC 712 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 710 and/or PMIC 712 in at least one embodiment to allow PCU 710 and/or PMIC 712 to manage processor core energy at least in part based on value(s) detected by one or more of the sensors.

Also illustrated is an example software stack of device 700 (although not all elements of the software stack are illustrated). Merely as an example, processors 704 may execute application programs 750, Operating System 752, one or more Power Management (PM) specific application programs (e.g., generically referred to as PM applications 758), and/or the like. PM applications 758 may also be executed by the PCU 710 and/or PMIC 712. OS 752 may also include one or more PM applications 756a, 756b, 756c. The OS 752 may also include various drivers 754a, 754b, 754c, etc., some of which may be specific for power management purposes. In some embodiments, device 700 may further comprise a Basic Input/Output System (BIOS) 720. BIOS 720 may communicate with OS 752 (e.g., via one or more drivers 754), communicate with processors 704, etc.

For example, one or more of PM applications 758, 756, drivers 754, BIOS 720, etc. may be used to implement power management specific tasks, e.g., to control voltage and/or frequency of various components of device 700, to control wake-up state, sleep state, and/or any other appropriate power state of various components of device 700, control battery power usage, charging of the battery 718, features related to power saving operation, etc.

In some embodiments, pCode executing on PCU 710 a/b has a capability to enable compute and telemetries resources for the runtime support of the pCode. Here pCode refers to a firmware executed by PCU 710 a/b to manage performance of the SoC 701. For example, pCode may set frequencies and appropriate voltages for the processor 704. Part of the pCode are accessible via OS 752, for example. In various embodiments, mechanisms and methods are provided that dynamically change an Energy Performance Preference (EPP) value based on workloads, user behavior, and/or system conditions. There may be a well-defined interface between OS 752 and the pCode. The interface may allow or facilitate the software configuration of several parameters and/or may provide hints to the pCode. As an example, an EPP parameter may inform a pCode algorithm as to whether performance or battery life is more important. In some embodiments, one or more energy-performance preference (EPP) parameters and/or any of various other OS hints - e.g., including an OS hint for transitioning to a LPS mode - are stored in a register, such as a machine specific registers (MSR), that is associated with processor 704 - e.g., with a particular one of cores 708a, 708b, 708c.

This support may be done as well by the OS 752 by including machine-learning support and/or other suitable support (for example) as part of OS 752, by tuning the EPP value that the OS hints to the hardware (e.g., various components of SCO 701) by machine-learning prediction, and/or by delivering the machine-learning prediction to the pCode in a manner similar to that done by a Dynamic Tuning Technology (DTT) driver. In this model, OS 752 may have visibility to the same set of telemetries as are available to a DTT. As a result of a DTT machine-learning hint setting, pCode may tune its internal algorithms to implement LPS mode functionality as described herein. In one such embodiment, the pCode includes an algorithm for dynamic EPP that may take the two inputs, one from OS 752 and the other from software such as DTT, and may selectively choose to enable or disable LPS mode functionality. As part of this method, the pCode may enable in the DTT an option to tune its reaction for the DTT for different types of activity.

### Exemplary Computer Architectures.

Detailed below are describes of exemplary computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

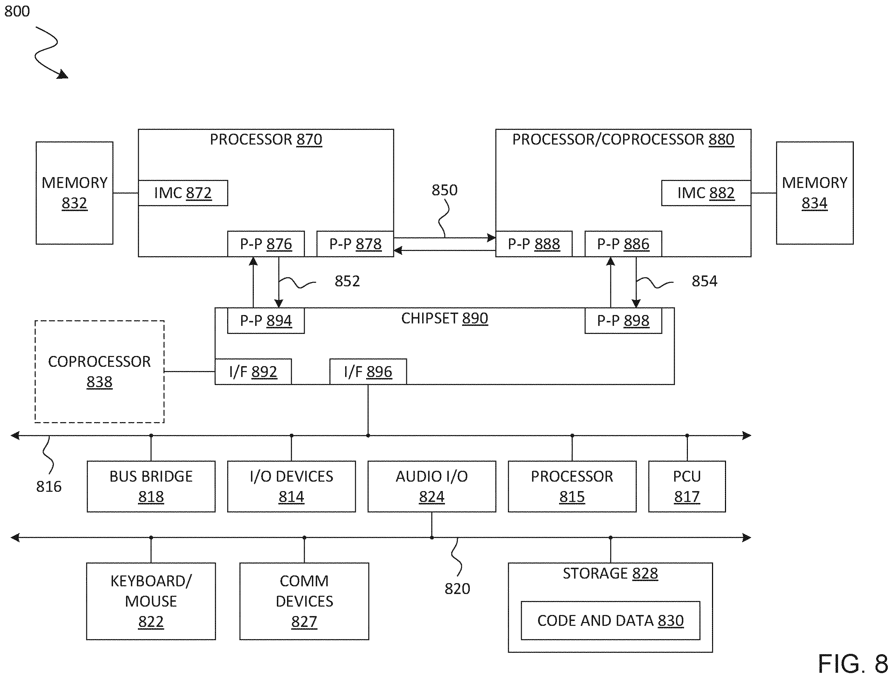

FIG. 8 illustrates an exemplary system. Multiprocessor system 800 is a point-to-point interconnect system and includes a plurality of processors including a first processor 870 and a second processor 880 coupled via a point-to-point interconnect 850. In some examples, the first processor 870 and the second processor 880 are homogeneous. In some examples, first processor 870 and the second processor 880 are heterogenous. Though the exemplary system 800 is shown to have two processors, the system may have three or more processors, or may be a single processor system.

Processors 870 and 880 are shown including integrated memory controller (IMC) circuitry 872 and 882, respectively. Processor 870 also includes as part of its interconnect controller point-to-point (P-P) interfaces 876 and 878; similarly, second processor 880 includes P-P interfaces 886 and 888. Processors 870, 880 may exchange information via the point-to-point (P-P) interconnect 850 using P-P interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a chipset 890 via individual P-P interconnects 852, 854 using point to point interface circuits 876, 894, 886, 898. Chipset 890 may optionally exchange information with a coprocessor 838 via an interface 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via P-P interconnect, such that either or both processors' local cache information may be stored in the shared cache if a processor is placed into a low power mode.

Chipset 890 may be coupled to a first interconnect 816 via an interface 896. In some examples, first interconnect 816 may be a Peripheral Component Interconnect (PCI) interconnect, or an interconnect such as a PCI Express interconnect or another I/O interconnect. In some examples, one of the interconnects couples to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interconnect 816, along with a bus bridge 818 which couples first interconnect 816 to a second interconnect 820. In some examples, one or more additional processor(s) 815, such as coprocessors, high-throughput many integrated core (MIC) processors, GPGPUs, accelerators (such as graphics accelerators or digital signal processing (DSP) units), field programmable gate arrays (FPGAs), or any other processor, are coupled to first interconnect 816. In some examples, second interconnect 820 may be a low pin count (LPC) interconnect. Various devices may be coupled to second interconnect 820 including, for example, a keyboard and/or mouse 822, communication devices 827 and a storage circuitry 828. Storage circuitry 828 may be one or more non-transitory machine-readable storage media as described below, such as a disk drive or other mass storage device which may include instructions/code and data 830 in some examples. Further, an audio I/O 824 may be coupled to second interconnect 820. Note that other architectures than the point-to-point architecture described above are possible. For example, instead of the point-to-point architecture, a system such as multiprocessor system 800 may implement a multi-drop interconnect or other such architecture.

### Exemplary Core Architectures. Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may include on the same die as the described CPU (sometimes referred to as the application core(s) or application processor(s)), the above described coprocessor, and additional functionality. Exemplary core architectures are described next, followed by descriptions of exemplary processors and computer architectures.

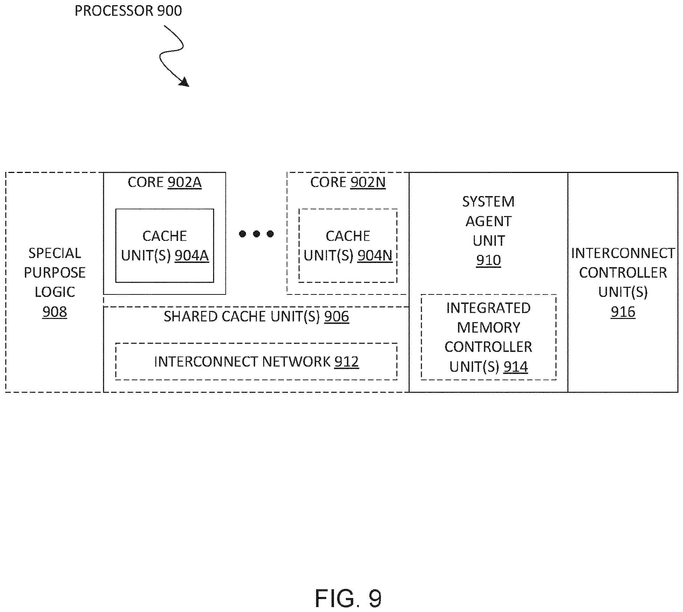

FIG. 9 illustrates a block diagram of an example processor 900 that may have more than one core and an integrated memory controller. The solid lined boxes illustrate a processor 900 with a single core 902A, a system agent unit circuitry 910, a set of one or more interconnect controller unit(s) circuitry 916, while the optional addition of the dashed lined boxes illustrates an alternative processor 900 with multiple cores 902A-N, a set of one or more integrated memory controller unit(s) circuitry 914 in the system agent unit circuitry 910, and special purpose logic 908, as well as a set of one or more interconnect controller units circuitry 916. Note that the processor 900 may be one of the processors 870 or 880, or co-processor 838 or 815 of FIG. 8.

Thus, different implementations of the processor 900 may include: 1) a CPU with the special purpose logic 908 being integrated graphics and/or scientific (throughput) logic (which may include one or more cores, not shown), and the cores 902A-N being one or more general purpose cores (e.g., general purpose in-order cores, general purpose out-of-order cores, or a combination of the two); 2) a coprocessor with the cores 902A-N being a large number of special purpose cores intended primarily for graphics and/or scientific (throughput); and 3) a coprocessor with the cores 902A-N being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904A-N within the cores 902A-N, a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples ring-based interconnect network circuitry 912 interconnects the special purpose logic 908 (e.g., integrated graphics logic), the set of shared cache unit(s) circuitry 906, and the system agent unit circuitry 910, alternative examples use any number of well-known techniques for interconnecting such units. In some examples, coherency is maintained between one or more of the shared cache unit(s) circuitry 906 and cores 902A-N.

In some examples, one or more of the cores 902A-N are capable of multi-threading. The system agent unit circuitry 910 includes those components coordinating and operating cores 902A-N. The system agent unit circuitry 910 may include, for example, power control unit (PCU) circuitry and/or display unit circuitry (not shown). The PCU may be or may include logic and components needed for regulating the power state of the cores 902A-N and/or the special purpose logic 908 (e.g., integrated graphics logic). The display unit circuitry is for driving one or more externally connected displays.

The cores 902A-N may be homogenous in terms of instruction set architecture (ISA). Alternatively, the cores 902A-N may be heterogeneous in terms of ISA; that is, a subset of the cores 902A-N may be capable of executing an ISA, while other cores may be capable of executing only a subset of that ISA or another ISA.

### Exemplary Core Architectures -In-order and out-of-order core block diagram.

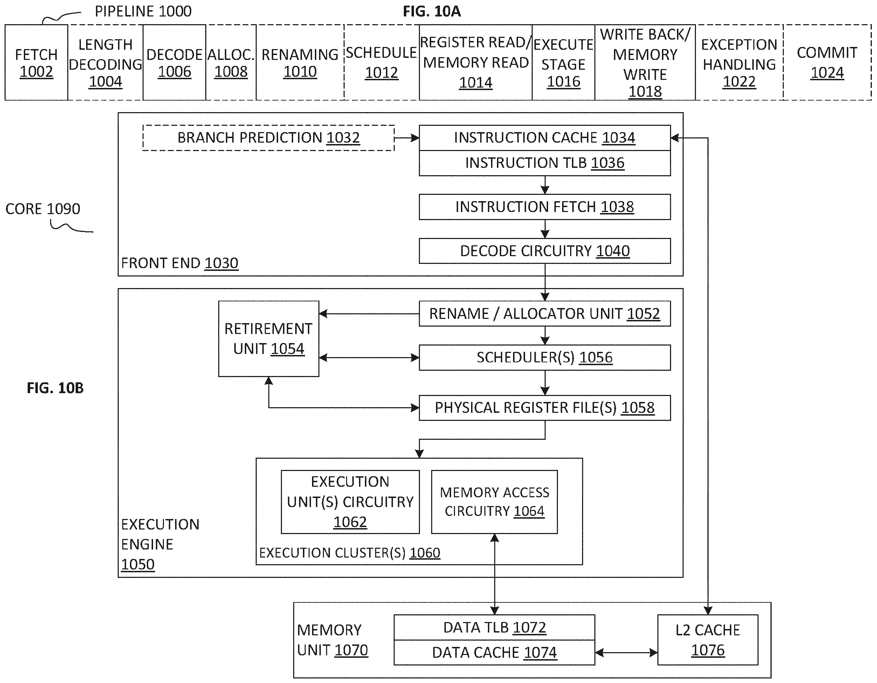

FIG. 10A is a block diagram illustrating both an exemplary in-order pipeline and an exemplary register renaming, out-of-order issue/execution pipeline according to examples. FIG. 10B is a block diagram illustrating both an exemplary example of an in-order architecture core and an exemplary register renaming, out-of-order issue/execution architecture core to be included in a processor according to examples. The solid lined boxes in FIGS. 10A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 10A, a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the exemplary register renaming, out-of-order issue/execution architecture core of FIG. 10B may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

FIG. 10B shows a processor core 1090 including front-end unit circuitry 1030 coupled to an execution engine unit circuitry 1050, and both are coupled to a memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front end unit circuitry 1030 may include branch prediction circuitry 1032 coupled to an instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 1040 may further include an address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to a retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, arithmetic generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to a data cache circuitry 1074 coupled to a level 2 (L2) cache circuitry 1076. In one exemplary example, the memory access circuitry 1064 may include a load unit circuitry, a store address unit circuit, and a store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, a level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Exemplary Execution Unit(s) Circuitry.

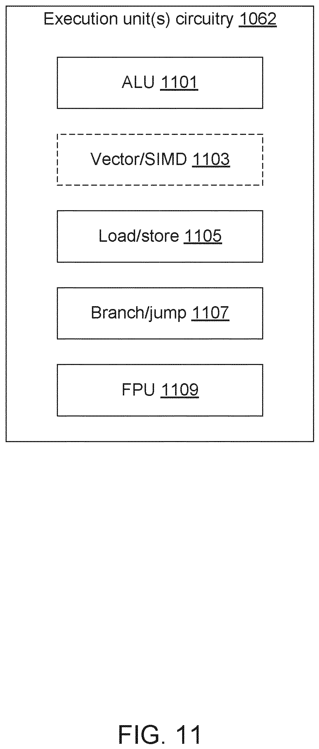

FIG. 11 illustrates examples of execution unit(s) circuitry, such as execution unit(s) circuitry 1062 of FIG. 10B. As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Exemplary Register Architecture

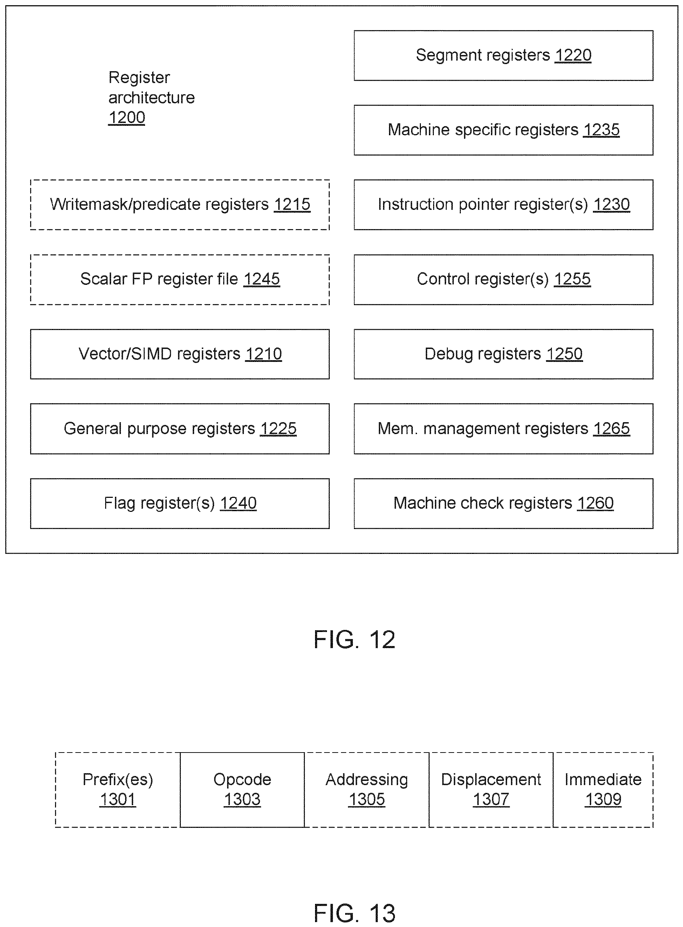

FIG. 12 is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a GDTR, IDRT, task register, and a LDTR register.

Alternative examples may use wider or narrower registers. Additionally, alternative examples may use more, less, or different register files and registers. The register architecture 1200 may, for example, be used in physical register file(s) circuitry 1058.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Exemplary Instruction Formats.

Examples of the instruction(s) described herein may be embodied in different formats. Additionally, exemplary systems, architectures, and pipelines are detailed below. Examples of the instruction(s) may be executed on such systems, architectures, and pipelines, but are not limited to those detailed.

FIG. 13 illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate value 1309. Note that some instructions utilize some or all of the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is one, two, or three bytes in length. In other examples, a primary opcode can be a different length. An additional 3-bit opcode field is sometimes encoded in another field.

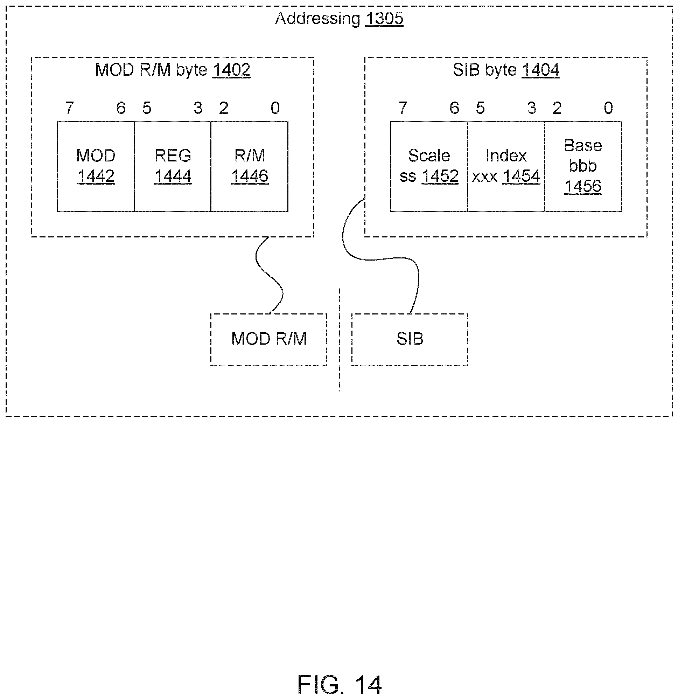

The addressing field 1305 is used to address one or more operands of the instruction, such as a location in memory or one or more registers. FIG. 14 illustrates examples of the addressing field 1305. In this illustration, an optional ModR/M byte 1402 and an optional Scale, Index, Base (SIB) byte 1404 are shown. The ModR/M byte 1402 and the SIB byte 1404 are used to encode up to two operands of an instruction, each of which is a direct register or effective memory address. Note that each of these fields are optional in that not all instructions include one or more of these fields. The MOD R/M byte 1402 includes a MOD field 1442, a register (reg) field 1444, and R/M field 1446.

The content of the MOD field 1442 distinguishes between memory access and non-memory access modes. In some examples, when the MOD field 1442 has a binary value of 11 (1 1b), a register-direct addressing mode is utilized, and otherwise register-indirect addressing is used.

The register field 1444 may encode either the destination register operand or a source register operand, or may encode an opcode extension and not be used to encode any instruction operand. The content of register index field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2scale * index + base).

Some addressing forms utilize a displacement value to generate a memory address. For example, a memory address may be generated according to 2scale * index + base + displacement, index*scale+displacement, r/m + displacement, instruction pointer (RIP/EIP) + displacement, register + displacement, etc. The displacement may be a 1-byte, 2-byte, 4-byte, etc. value. In some examples, a displacement 1307 provides this value. Additionally, in some examples, a displacement factor usage is encoded in the MOD field of the addressing field 1305 that indicates a compressed displacement scheme for which a displacement value is calculated and stored in the displacement field 1307.

In some examples, an immediate field 1309 specifies an immediate value for the instruction. An immediate value may be encoded as a 1-byte value, a 2-byte value, a 4-byte value, etc.

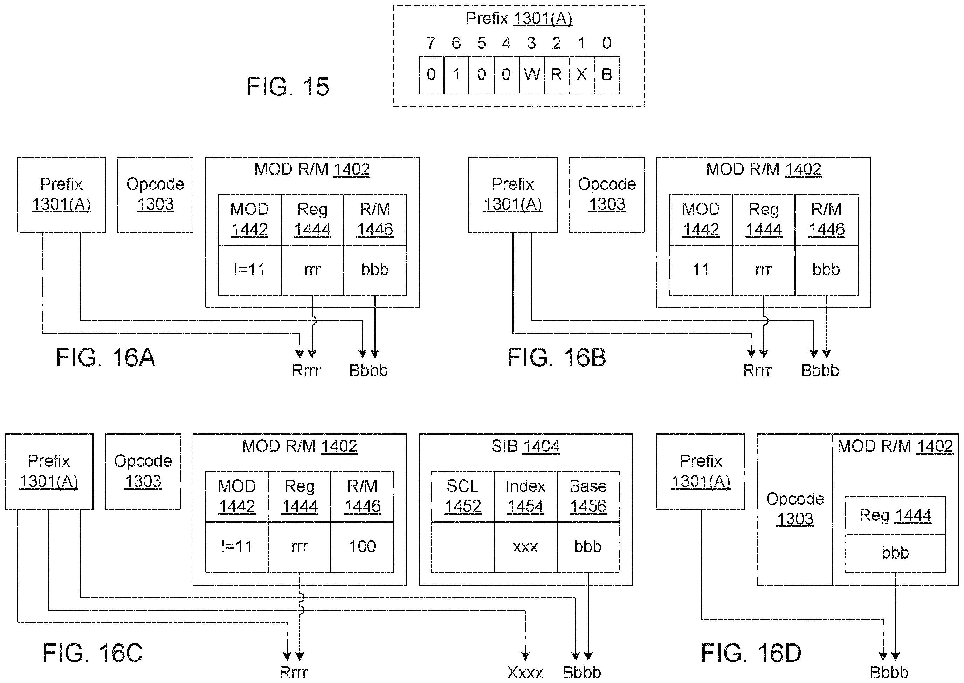

FIG. 15 illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the Mod R/M byte 1402; 2) using the Mod R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD R/M reg field 1444 and MOD R/M R/M field 1446 alone can each only address 8 registers.

In the first prefix 1301(A), bit position 2 (R) may be an extension of the MOD R/M reg field 1444 and may be used to modify the ModR/M reg field 1444 when that field encodes a general-purpose register, a 64-bit packed data register (e.g., a SSE register), or a control or debug register. R is ignored when Mod R/M byte 1402 specifies other registers or defines an extended opcode.

Bit position 1 (X) may modify the SIB byte index field 1454.

Bit position 0 (B) may modify the base in the Mod R/M R/M field 1446 or the SIB byte base field 1456; or it may modify the opcode register field used for accessing general purpose registers (e.g., general purpose registers 1225).

FIGS. 16A-D illustrate examples of how the R, X, and B fields of the first prefix 1301(A) are used. FIG. 16A illustrates R and B from the first prefix 1301(A) being used to extend the reg field 1444 and R/M field 1446 of the MOD R/M byte 1402 when the SIB byte 14 04 is not used for memory addressing. FIG. 16B illustrates R and B from the first prefix 1301(A) being used to extend the reg field 1444 and R/M field 1446 of the MOD R/M byte 1402 when the SIB byte 1404 is not used (register-register addressing). FIG. 16C illustrates R, X, and B from the first prefix 1301(A) being used to extend the reg field 1444 of the MOD R/M byte 1402 and the index field 1454 and base field 1456 when the SIB byte 14 04 being used for memory addressing. FIG. 16D illustrates B from the first prefix 1301(A) being used to extend the reg field 1444 of the MOD R/M byte 1402 when a register is encoded in the opcode 1303.

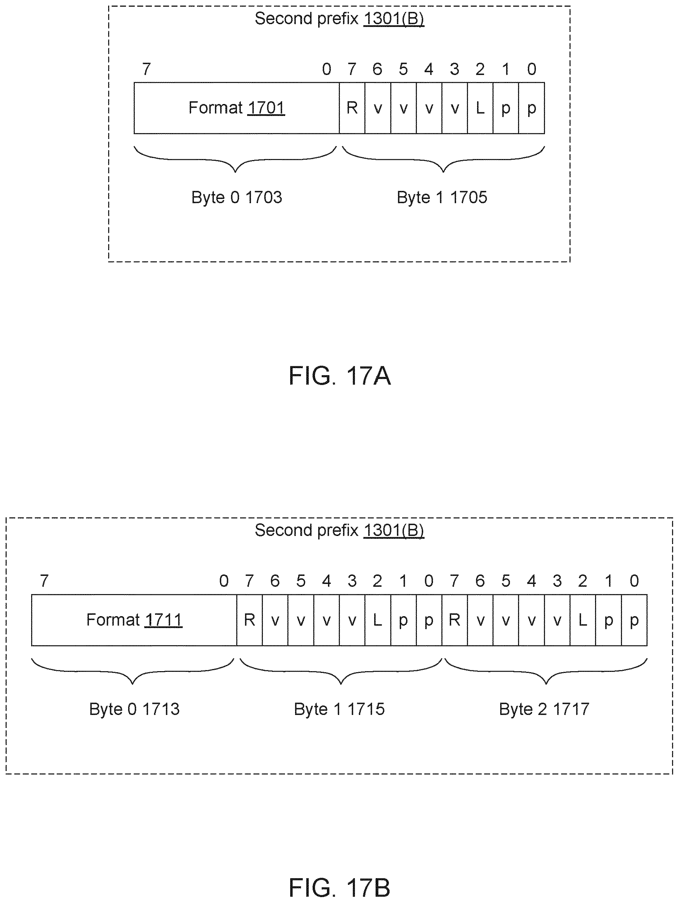

FIGS. 17A-B illustrate examples of a second prefix 1301(B). In some examples, the second prefix 1301(B) is an example of a VEX prefix. The second prefix 1301(B) encoding allows instructions to have more than two operands, and allows SINM vector registers (e.g., vector/SINM registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

FIG. 17A illustrates examples of a two-byte form of the second prefix 1301(B). In one example, a format field 1701 (byte 0 1703) contains the value C5H. In one example, byte 1 1705 includes a "R" value in bit[7]. This value is the complement of the "R" value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvw may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 11 11b.

Instructions that use this prefix may use the Mod R/M R/M field 1446 to encode the instruction operand that references a memory address or encode either the destination register operand or a source register operand.

Instructions that use this prefix may use the Mod R/M reg field 1444 to encode either the destination register operand or a source register operand, be treated as an opcode extension and not used to encode any instruction operand.

For instruction syntax that support four operands, vvvv, the Mod R/M R/M field 1446 and the Mod R/M reg field 1444 encode three of the four operands. Bits[7:4] of the immediate 1309 are then used to encode the third source register operand.

FIG. 17B illustrates examples of a three-byte form of the second prefix 1301(B). In one example, a format field 1711 (byte 0 1713) contains the value C4H. Byte 1 1715 includes in bits[7:5] "R," "X," and "B" which are the complements of the same values of the first prefix 1301(A). Bits[4:0] of byte 1 1715 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as ww, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1446 to encode the instruction operand that references a memory address or encode either the destination register operand or a source register operand.

Instructions that use this prefix may use the Mod R/M reg field 1444 to encode either the destination register operand or a source register operand, be treated as an opcode extension and not used to encode any instruction operand.

For instruction syntax that support four operands, vvvv, the Mod R/M R/M field 1446, and the Mod R/M reg field 1444 encode three of the four operands. Bits[7:4] of the immediate 1309 are then used to encode the third source register operand.

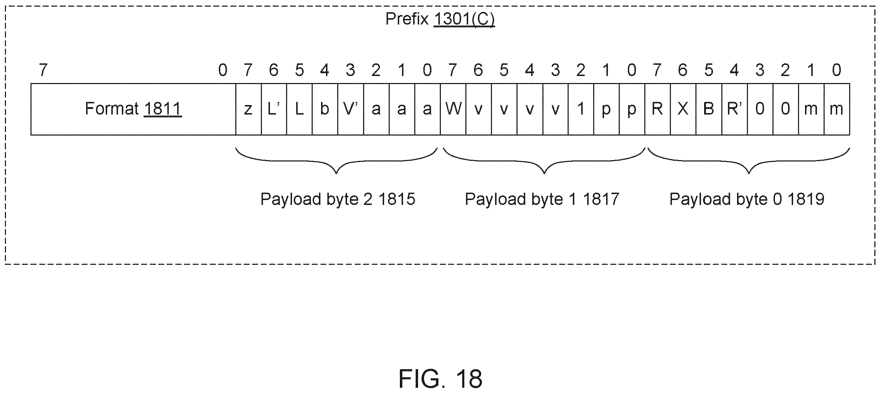

FIG. 18 illustrates examples of a third prefix 1301(C). In some examples, the first prefix 1301(A) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 12) or predication utilize this prefix. Opmask register allow for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mmmmm bits. P[3:2] are reserved in some examples. Bit P[4] (R') allows access to the high 16 vector register set when combined with P[7] and the ModR/M reg field 1444. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1444 and ModR/M R/M field 1446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14: 11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 111 1b.

P[15] is similar to W of the first prefix 1301(A) and second prefix 1301(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary examples of encoding of registers in instructions using the third prefix 1301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | ModR/M reg | GPR, Vector | Destination or Source |
| VVVV | V' | vvvv | | GPR, Vector | 2nd Source or Destination |
| RM | X | B | ModR/M R/M | GPR, Vector | 1st Source or Destination |
| BASE | 0 | B | ModR/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | ModR/M reg | GPR, Vector | Destination or Source |
| VVVV | vvvv | GPR, Vector | 2nd Source or Destination |
| RM | ModR/M R/M | GPR, Vector | 1st Source or Destination |
| BASE | ModR/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | ModR/M Reg | k0-k7 | Source |
| VVVV | vvvv | k0-k7 | 2nd Source |
| RM | ModR/M R/M | k0-k7 | 1st Source |
| {k1] | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

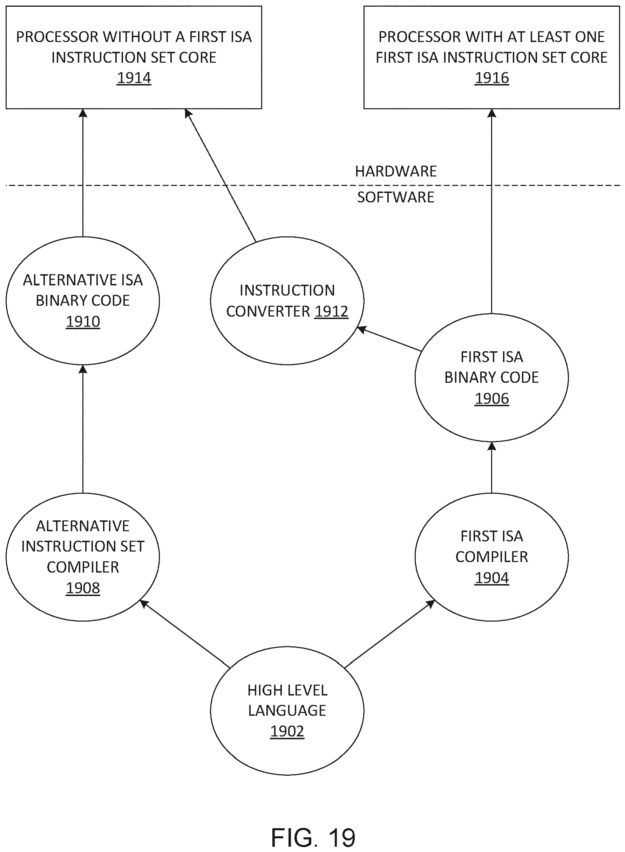

FIG. 19 illustrates a block diagram contrasting the use of a software instruction converter to convert binary instructions in a source instruction set architecture to binary instructions in a target instruction set architecture according to examples. In the illustrated example, the instruction converter is a software instruction converter, although alternatively the instruction converter may be implemented in software, firmware, hardware, or various combinations thereof. FIG. 19 shows a program in a high-level language 1902 may be compiled using a first ISA compiler 1904 to generate first ISA binary code 1906 that may be natively executed by a processor with at least one first instruction set architecture core 1916. The processor with at least one first ISA instruction set architecture core 1916 represents any processor that can perform substantially the same functions as an Intel^{®} processor with at least one first ISA instruction set architecture core by compatibly executing or otherwise processing (1) a substantial portion of the instruction set architecture of the first ISA instruction set architecture core or (2) object code versions of applications or other software targeted to run on an Intel processor with at least one first ISA instruction set architecture core, in order to achieve substantially the same result as a processor with at least one first ISA instruction set architecture core. The first ISA compiler 1904 represents a compiler that is operable to generate first ISA binary code 1906 (e.g., object code) that can, with or without additional linkage processing, be executed on the processor with at least one first ISA instruction set architecture core 1916. Similarly, FIG. 19 shows the program in the high-level language 1902 may be compiled using an alternative instruction set architecture compiler 1908 to generate alternative instruction set architecture binary code 1910 that may be natively executed by a processor without a first ISA instruction set architecture core 1914. The instruction converter 1912 is used to convert the first ISA binary code 1906 into code that may be natively executed by the processor without a first ISA instruction set architecture core 1914. This converted code is not necessarily to be the same as the alternative instruction set architecture binary code 1910; however, the converted code will accomplish the general operation and be made up of instructions from the alternative instruction set architecture. Thus, the instruction converter 1912 represents software, firmware, hardware, or a combination thereof that, through emulation, simulation or any other process, allows a processor or other electronic device that does not have a first ISA instruction set architecture processor or core to execute the first ISA binary code 1906.

In one or more first embodiments, a device comprises first circuitry to receive a first indication of a first thermal condition of a platform which comprises a processor, and transition a power management of the processor to a limited power states (LPS) mode based on the first indication, wherein two or more power states of the processor are allowed during the LPS mode, and one or more other power states of the processor are prevented during the LPS mode, and second circuitry which, during the LPS mode, is to monitor one or more software processes which are executed with the processor, and signal the first circuitry to transition the processor between the two or more power states based on a detection of a workload of the one or more software processes, wherein the first circuitry is further to receive a second indication of a second thermal condition of the platform, and transition the processor from the LPS mode based on the second indication, wherein the first circuitry is to enable the availability of the one or more other power states.

In one or more second embodiments, further to the first embodiment, the thermal condition is based on a skin temperature of a housing structure in which the processor is disposed.

In one or more third embodiments, further to the second embodiment, the thermal condition is an average skin temperature of the housing structure.

In one or more fourth embodiments, further to the second embodiment, the thermal condition is based on an integral of the skin temperature over time.

In one or more fifth embodiments, further to the second embodiment, the thermal condition is based on a rate of change of the skin temperature.

In one or more sixth embodiments, further to the first embodiment or the second embodiment, the one or more other power states comprise a first power state which is a high power state, relative to each of the two or more power states.

In one or more seventh embodiments, further to the first embodiment or the second embodiment, the two or more power states comprise a first power state and a second power state, wherein the first power state is a low power state, relative to the second power state, the first circuitry is to transition the processor from the first power state to the second power state based on the detection of the workload, and the first circuitry is further to transition the processor from the second power state to the first power state based on a completion of the workload.

In one or more eighth embodiments, further to the first embodiment or the second embodiment, the first circuitry to transition the power management of the processor to the LPS mode comprises the first circuitry to transition from a first state machine to a second state machine, the first state machine facilitates transitions of the processor between any of a first plurality of power states, the second state machine facilitates transitions of the processor between any of a second plurality of power states, and a total number of the first plurality of power states is greater than a total number of the second plurality of power states.

In one or more ninth embodiments, further to the eighth embodiment, the second plurality of power states is a subset of the first plurality of power states.

In one or more tenth embodiments, a method comprises receiving a first indication of a first thermal condition of a platform which comprises a processor, transitioning a power management of the processor to a limited power states (LPS) mode based on the first indication, wherein two or more power states of the processor are allowed during the LPS mode, and one or more other power states of the processor are prevented during the LPS mode, during the LPS mode monitoring one or more software processes which are executed with the processor, transitioning the processor between the two or more power states based on a detection of a workload of the one or more software processes, receiving a second indication of a second thermal condition of the platform, transitioning power management of the processor from the LPS mode based on the second indication, comprising enabling the availability of the one or more other power states.

In one or more eleventh embodiments, further to the tenth embodiment, the thermal condition is based on a skin temperature of a housing structure in which the processor is disposed.

In one or more twelfth embodiments, further to the eleventh embodiment, the thermal condition is an average skin temperature of the housing structure.

In one or more thirteenth embodiments, further to the eleventh embodiment, the thermal condition is based on an integral of the skin temperature over time.

In one or more fourteenth embodiments, further to the eleventh embodiment, the thermal condition is based on a rate of change of the skin temperature.

In one or more fifteenth embodiments, further to the tenth embodiment or the eleventh embodiment, the one or more other power states comprise a first power state which is a high power state, relative to each of the two or more power states.

In one or more sixteenth embodiments, further to the tenth embodiment or the eleventh embodiment, the two or more power states comprise a first power state and a second power state, wherein the first power state is a low power state, relative to the second power state, the processor is transitioned from the first power state to the second power state based on the detection of the workload, and the method further comprises transitioning the processor from the second power state to the first power state based on a completion of the workload.

In one or more seventeenth embodiments, further to the tenth embodiment or the eleventh embodiment, transitioning the power management of the processor to the LPS mode comprises transitioning from providing the power management with a first state machine to providing the power management with a second state machine, the first state machine facilitates transitions of the processor between any of a first plurality of power states, the second state machine facilitates transitions of the processor between any of a second plurality of power states, and a total number of the first plurality of power states is greater than a total number of the second plurality of power states.

In one or more eighteenth embodiments, further to the seventeenth embodiment, the second plurality of power states is a subset of the first plurality of power states.

In one or more nineteenth embodiments, a system comprises one or more sensors to generate a first indication of a first thermal condition of the system, first circuitry to receive the first indication, and further to transition a power management of a processor of the system to a limited power states (LPS) mode based on the first indication, wherein two or more power states of the processor are allowed during the LPS mode, and one or more other power states of the processor are prevented during the LPS mode, and second circuitry which, during the LPS mode, is to monitor one or more software processes which are executed with the processor, and further to signal the first circuitry to transition the processor between the two or more power states based on a detection of a workload of the one or more software processes, wherein the first circuitry is further to receive a second indication of a second thermal condition of the platform, and transition the processor from the LPS mode based on the second indication, wherein the first circuitry is to enable the availability of the one or more other power states.

In one or more twentieth embodiments, further to the nineteenth embodiment, the thermal condition is based on a skin temperature of a housing structure in which the processor is disposed.

In one or more twenty-first embodiments, further to the twentieth embodiment, the thermal condition is an average skin temperature of the housing structure.

In one or more twenty-second embodiments, further to the twentieth embodiment, the thermal condition is based on an integral of the skin temperature over time.

In one or more twenty-third embodiments, further to the twentieth embodiment, the thermal condition is based on a rate of change of the skin temperature.

In one or more twenty-fourth embodiments, further to the nineteenth embodiment or the twentieth embodiment, the one or more other power states comprise a first power state which is a high power state, relative to each of the two or more power states.

In one or more twenty-fifth embodiments, further to the nineteenth embodiment or the twentieth embodiment, the two or more power states comprise a first power state and a second power state, wherein the first power state is a low power state, relative to the second power state, the first circuitry is to transition the processor from the first power state to the second power state based on the detection of the workload, and the first circuitry is further to transition the processor from the second power state to the first power state based on a completion of the workload.

In one or more twenty-sixth embodiments, further to the nineteenth embodiment or the twentieth embodiment, the first circuitry to transition the power management of the processor to the LPS mode comprises the first circuitry to transition from a first state machine to a second state machine, the first state machine facilitates transitions of the processor between any of a first plurality of power states, the second state machine facilitates transitions of the processor between any of a second plurality of power states, and a total number of the first plurality of power states is greater than a total number of the second plurality of power states.

In one or more twenty-seventh embodiments, further to the twenty-sixth embodiment, the second plurality of power states is a subset of the first plurality of power states.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. A device comprising:
first circuitry to:
receive a first indication of a first thermal condition of a platform which comprises a processor; and
transition a power management of the processor to a limited power states (LPS) mode based on the first indication, wherein two or more power states of the processor are allowed during the LPS mode, and one or more other power states of the processor are prevented during the LPS mode; and
second circuitry which, during the LPS mode, is to:
monitor one or more software processes which are executed with the processor; and
signal the first circuitry to transition the processor between the two or more power
states based on a detection of a workload of the one or more software processes;
wherein the first circuitry is further to:
receive a second indication of a second thermal condition of the platform; and
transition the processor from the LPS mode based on the second indication, wherein the first circuitry is to enable the availability of the one or more other power states.

2. The device of claim 1, wherein the thermal condition is based on a skin temperature of a housing structure in which the processor is disposed.

3. The device of claim 2, wherein the thermal condition is an average skin temperature of the housing structure.

4. The device of claim 2, wherein the thermal condition is based on an integral of the skin temperature over time.

5. The device of claim 2, wherein the thermal condition is based on a rate of change of the skin temperature.

6. The device of any of claim 1 or claim 2, wherein the one or more other power states comprise a first power state which is a high power state, relative to each of the two or more power states.

7. The device of any of claim 1 or claim 2, wherein:
the two or more power states comprise a first power state and a second power state, wherein the first power state is a low power state, relative to the second power state;
the first circuitry is to transition the processor from the first power state to the second power state based on the detection of the workload; and
the first circuitry is further to transition the processor from the second power state to the first power state based on a completion of the workload.

8. The device of any of claim 1 or claim 2, wherein:
the first circuitry to transition the power management of the processor to the LPS mode comprises the first circuitry to transition from a first state machine to a second state machine;
the first state machine facilitates transitions of the processor between any of a first plurality of power states;
the second state machine facilitates transitions of the processor between any of a second plurality of power states; and
a total number of the first plurality of power states is greater than a total number of the second plurality of power states.

9. The device of claim 8, wherein the second plurality of power states is a subset of the first plurality of power states.

10. A method comprising:
receiving a first indication of a first thermal condition of a platform which comprises a processor;
transitioning a power management of the processor to a limited power states (LPS) mode based on the first indication, wherein:
two or more power states of the processor are allowed during the LPS mode; and
one or more other power states of the processor are prevented during the LPS mode;
during the LPS mode:
monitoring one or more software processes which are executed with the processor;
transitioning the processor between the two or more power states based on a detection of a workload of the one or more software processes;
receiving a second indication of a second thermal condition of the platform;
transitioning power management of the processor from the LPS mode based on the second indication, comprising enabling the availability of the one or more other power states.

11. The method of claim 10, wherein the thermal condition is based on a skin temperature of a housing structure in which the processor is disposed.

12. The method of claim 11, wherein the thermal condition is an average skin temperature of the housing structure.

13. The method of any of claim 10 or claim 11, wherein the one or more other power states comprise a first power state which is a high power state, relative to each of the two or more power states.

14. The method of any of claim 10 or claim 11, wherein:
the two or more power states comprise a first power state and a second power state, wherein the first power state is a low power state, relative to the second power state;
the processor is transitioned from the first power state to the second power state based on the detection of the workload; and
the method further comprises transitioning the processor from the second power state to the first power state based on a completion of the workload.

15. The method of any of claim 10 or claim 11, wherein:
transitioning the power management of the processor to the LPS mode comprises transitioning from providing the power management with a first state machine to providing the power management with a second state machine;
the first state machine facilitates transitions of the processor between any of a first plurality of power states;
the second state machine facilitates transitions of the processor between any of a second plurality of power states; and
a total number of the first plurality of power states is greater than a total number of the second plurality of power states.
